# EUROPÄISCHE PATENTSCHRIFT

(11) **EP 4 644 501 B1**
(45) Veröffentlichungstag und Bekanntmachung des Hinweises auf die Patenterteilung: **11.03.2026**
(21) Anmeldenummer: 24174086.9
(22) Anmeldetag: 03.05.2024
(51) Int. Cl.: C09J 4/00, C04B 40/06, C04B 26/06, E21D 20/02, F16B 13/14, C08F 222/10

(54) **VERBUNDANKERPATRONE**
COMPOSITE ANCHOR CARTRIDGE
CARTOUCHE D'ANCRAGE COMPOSITE

(43) Veröffentlichungstag der Anmeldung: 05.11.2025
(73) Patentinhaber: MKT Metall-Kunststoff-Technik GmbH & Co. KG, 67685 Weilerbach (DE)
(72) Erfinder: SCHERRER, Christopher, 67706 Krickenbach (DE); HANZ, Florian, 66907 Glan-Münchweiler (DE)
(74) Vertreter: Kutzenberger Wolff & Partner

(56) Entgegenhaltungen:
- EP-A1- 3 712 184
- WO-A1-2019/121366
- WO-A1-2020/007820

## Beschreibung

Die Erfindung betrifft eine Verbundankerpatrone, welche (i) einen ersten Behälter mit einem ersten Innenraum, welcher ein Reaktivharz mit ethylenisch ungesättigten Gruppen enthält; und (ii) einen zweiten Behälter mit einem zweiten Innenraum, welcher einen partikulären Härter enthält; umfasst. Der Härter umfasst Dibenzoylperoxid, das mit Ethylenglykoldibenzoat phlegmatisiert ist, wobei der Gehalt an Dibenzoylperoxid weniger als 50,0 Gew.-% beträgt, bevorzugt höchstens 49,4 Gew.-%, bezogen auf das Gesamtgewicht des Härters.

Verbundankerpatronen (chemische Dübel, Befestigungsmörtel, Reaktionspatronen, etc.) sind Befestigungssysteme, welche zur Verankerung von Verankerungsmitteln in Bohrlöchern eingesetzt werden. Die Verbundankerpatronen enthalten dafür ein Reaktivharz sowie einen räumlich getrennten Härter. Im Bohrloch werden Reaktivharz und Härter miteinander vermischt, häufig durch mechanisches Aufbrechen der Verbundankerpatrone mit Hilfe des Verankerungsmittels, z.B. einer Schraube oder Gewindestange. Durch die Vermischung wird eine radikalische Reaktion ausgelöst, die zur Aushärtung des Harzes führt, wodurch das Verankerungsmittel fest im Bohrloch verankert wird.

Die Härter enthalten meist Dibenzoylperoxid, welches zur Verbesserung der Lagerstabilität mit einem Phlegmatisierungsmittel stabilisiert ist. Früher wurde in Verbundankerpatronen häufig Dicyclohexylphthalat (DCHP) als Phlegmatisierungsmittel für Dibenzoylperoxid eingesetzt. Da Dicyclohexylphthalat jedoch gesundheitsschädlich ist, wurde es in jüngerer Zeit ersetzt, insbesondere durch Ethylenglykoldibenzoat (EGDB).

EP 3 712 184 A1 betrifft ein Befestigungssystem umfassend zwei getrennt voneinander vorliegende Komponenten (A) und (B). Die Komponente (A) enthält mindestens ein Harz, während die als Härter fungierende Komponente (B) mindestens ein Peroxid, bevorzugt Dibenzoylperoxid, und mindestens ein Benzoat, bevorzugt Ethylenglykoldibenzoat oder Diethylenglykoldibenzoat, enthält. WO 2019/121366 A1 betrifft ein Verfahren zur Herstellung einer pulverförmigen organischen Peroxidformulierung, wobei das Verfahren die folgenden Schritte umfasst: a) Herstellen einer Reaktionsmischung, die Folgendes umfasst: - 40-80 Gew.-% Wasser - 10-25 Gew.-% eines Säurechlorids oder Chlorformiats, - 1-4 Gew.-% Wasserstoffperoxid, - 2-8 Gew.-% Alkalimetallhydroxid, - 1-25 Gew.-% eines Phlegmatisierungsmittels, ausgewählt aus der Gruppe bestehend aus Ethylenglykoldibenzoat, Phenylbenzoat, Trimethylolpropantribenzoat, Glyceryltribenzoat, Ethylenglykolditoluat, 1,3-Propandiolditoluat, Ethylenglykol-4-tert-butylbenzoat, Ethylenglykolmonobenzoatmonotoluat, 2,3-Butandioldibenzoat, 4-Methylphenylbenzoatsäureester, Trimethylolpropandibenzoat und Kombinationen davon - 0,002-0,20 Gew.-% eines Tensids und - 0,25-5,0 Gew.-% eines inerten organischen Lösungsmittels, alle Prozentangaben beziehen sich auf das Gewicht der Reaktionsmischung, b) Erhitzen der Reaktionsmischung auf eine Temperatur im Bereich von 5-50°C.

EP 3 818 026 A1 betrifft die Verwendung von einem Kit in Form von einer Patrone oder einem Folienbeutel, die oder der mehrere, insbesondere zwei, Kompartimente aufweist, von denen eines eine radikalisch polymerisierbares Kunstharz umfassende Kunstharzkomponente beinhaltet, das andere einen phlegmatisierten Radikalinitiator in einer Härterkomponente beinhaltet, wobei der Radikalinitiator durch einen phthatlatfreien Weichmacher unter mindestens teilweiser Beschichtung phlegmatisiert ist, und wobei der Weichmacher eine Schmelztemperatur im Bereich von 40 bis 90 °C hat, der Radikalinitiator bei Raumtemperatur in fester Form vorliegt und der phlegmatisierte Radikalinitiator bei Raumtemperatur in partikulärer Form vorliegt und als frei rieselndes Pulver ausgeführt ist, zur Befestigung eines Verankerungselementes in einem (insbesondere Bohr-)Loch in einem Bausubstrat. In den Beispielen wird als phlegmatisierter Härter ein mit Ethylenglykoldibenzoat phlegmatisiertes 50 Gew-%iges Dibenzoylperoxid eingesetzt.

Die bekannten Verbundankerpatronen sind nicht in jeglicher Hinsicht zufriedenstellend. Es ist daher eine Aufgabe der Erfindung, verbesserte Verbundankerpatronen bereitzustellen.

Die Verbundankerpatronen sollten eine verbesserte mechanische Verankerung der Verankerungsmittel in Hohlräumen von Bausubstraten, insbesondere in Bohrlöchern ermöglichen, einfach und zuverlässig anwendbar sein und eine gute Lagerstabilität aufweisen, auch bei unterschiedlichen klimatischen Verhältnissen, insbesondere sowohl hohen als auch tiefen Umgebungstemperaturen. Die Verbundankerpatronen sollten zudem bei unterschiedlichen klimatischen Verhältnissen, insbesondere sowohl hohen als auch tiefen Umgebungstemperaturen, angewendet werden können und die Reaktivharze zuverlässig aushärten.

Diese Aufgabe wird durch den Gegenstand der Patentansprüche gelöst.

Die Erfindung wird durch die beigefügten Ansprüche definiert. Ein erster Aspekt der Erfindung betrifft eine Verbundankerpatrone umfassend
(i) einen ersten Behälter mit einem ersten Innenraum, welcher ein Reaktivharz mit ethylenisch ungesättigten Gruppen enthält; und
(ii) einen zweiten Behälter mit einem zweiten Innenraum, welcher einen partikulären Härter enthält; wobei der Härter Dibenzoylperoxid umfasst, das mit Ethylenglykoldibenzoat phlegmatisiert ist, und wobei der Gehalt an Dibenzoylperoxid weniger als 50,0 Gew.-% beträgt, bezogen auf das Gesamtgewicht des Härters.

Die erfindungsgemäßen Verbundankerpatronen haben Vorteile, welche auf die Zusammensetzung des Härters zurückzuführen sind.

So wurde überraschend gefunden, dass mit Härtern auf Basis von Dibenzoylperoxid, welches mit Ethylenglykoldibenzoat phlegmatisiert ist, bessere mechanische Festigkeiten, insbesondere höhere Verbundspannungen erreicht werden, wenn der Gehalt an Dibenzoylperoxid weniger als 50,0 Gew.-% beträgt, bezogen auf das Gesamtgewicht des Härters.

So haben Vergleichsexperimente zu dem überraschenden Ergebnis geführt, dass ein phlegmatisierter Härter aus 45 Gew.-% Dibenzoylperoxid und 55 Gew.-% Ethylenglykoldibenzoat signifikant höhere Verbundspannungen ermöglicht als ein phlegmatisierter Härter aus 50 Gew.-% Dibenzoylperoxid und 50 Gew.-% Ethylenglykoldibenzoat, und zwar unabhängig vom Typ der Verbundankerpatrone (z.B. M8, M10, M12, M16, M20, etc.).

Darüber hinaus haben die erfindungsgemäßen Verbundankerpatronen Vorteile, welche auf die Dimensionierung des ersten und zweiten Behälters sowie deren individuelle Füllhöhen zurückzuführen sind.

So wurde überraschend gefunden, dass die mechanischen Festigkeiten verbessert werden können, wenn Härter und Reaktivharz vor der Vermischung miteinander jeweils entlang der Längsausdehnung der Verbundankerpatrone möglichst gleichmäßig verteilt vorliegen. Wird die so vorbereitete Verbundankerpatrone dann in ein Bohrloch eingebracht und anschließend mit Hilfe des Verankerungsmittels aufgebrochen, so kann die Vermischung von Härter und Reaktivharz besonders gut und homogen erfolgen, wodurch verbesserte mechanische Eigenschaften erreicht werden können. Lokale Bereiche, bei denen zu wenig Härter vorliegt, bzw. lokale Bereiche, bei denen zu viel Härter vorliegt, werden vermieden; die Aushärtung des Reaktivharzes erfolgt gleichmäßig und optimiert.

Dies ist auch insofern überraschend, als dass eine Verbundankerpatrone nach dem Einbringen in ein Bohrloch einen deutlichen Teil des Bohrlochs ausfüllt. Häufig ist der Abstand der Außenwand der Verbundankerpatrone zur Innenwand des Bohrlochs nur sehr gering, z.B. auch um Überkopfanwendungen zu ermöglichen, ohne dass die Verbundankerpatrone nach dem Einbringen in ein Bohrloch sofort wieder herausfällt. Eine längliche Verbundankerpatrone weist zwei Enden auf und wird mit dem einen Ende zuerst in das Bohrloch eingebracht, d.h. dieses Ende weist zum Ende des Bohrlochs im Bausubstrat. Das anschließende Aufbrechen der Verbundankerpatrone mit dem Verankerungsmittel erfolgt dann nicht über die Längsseite der Verbundankerpatrone, sondern über deren anderes Ende, welches der Öffnung des Bohrlochs zugewandt ist. Es wurde überraschend gefunden, dass die räumliche Verteilung des Härters entlang der Längsausdehnung der Verbundankerpatrone dennoch einen wesentlichen Einfluss auf die mechanische Festigkeit des Verbunds nach dem Aushärten hat, obwohl die Verbundankerpatrone vom Ende her aufgebrochen wird.

Eine gleichmäßige Verteilung von Härter und Reaktivharz entlang der Längsausdehnung der Verbundankerpatrone ist jedoch nicht immer einfach zu verwirklichen, insbesondere wenn die Verbundankerpatrone aus zwei länglichen Behältern aufgebaut ist, von denen ein Behälter das Reaktivharz und der andere Behälter den Härter enthält, und wenn zumindest einer der Behälter aus Glas gefertigt ist. In einem solchen Fall sollte nämlich herstellungsbedingt der aus Glas gefertigte Behälter nicht vollständig bis zur Oberkante mit Füllgut befüllt sein, sondern bei vertikaler Ausrichtung sollte ein oberer Bereich des Innerraums leer bleiben. Dann kann der Behälter nach dem Befüllen verschlossen werden, indem das Glas in diesem oberen Bereich abgeschmolzen wird, z.B. mit einem Gasbrenner, ohne dass das Füllgut des Behälters einer zu großen Erwärmung oder Überhitzung ausgesetzt wird. Erfindungsgemäße Verbundankerpatronen mit einer äußeren Glasampulle (erster Behälter) und einer darin angeordneten, inneren Glasampulle (zweiter Behälter) sind daher herstellungsbedingt bevorzugt nur zu einem Teil der maximal möglichen Füllhöhe befüllt.

Es wurde überraschend gefunden, dass durch leichtes Hin- und Herbewegen oder sanftes Schütteln der Verbundankerpatrone in horizontaler Richtung der partikuläre Härter gut aufgelockert und entlang der Längsausdehnung des inneren zweiten Behälters verteilt werden kann. Dies gelingt insbesondere dann, wenn die Länge des inneren zweiten Behälters etwas kürzer als die Länge des äußeren ersten Behälters ist, so dass dieser beim leichten Hin- und Herbewegen oder sanften Schütteln der Verbundankerpatrone in horizontaler Richtung beschleunigt werden kann, ehe er mit seinem Ende (äußere Stirnseite) gegen das Ende (innere Stirnseite) des äußeren Behälters schlägt, ohne dabei zu zerbrechen. Selbst wenn die Partikel des Härters im inneren zweiten Behälter leicht verbacken, d.h. nicht mehr frei fließend sein sollten, etwa durch Verdichtung beim Transport oder Lagerung der Verbundankerpatrone in vertikaler Ausrichtung (hochkant), können die Partikel des Härters durch leichtes Hin- und Herbewegen oder sanftes Schütteln der Verbundankerpatrone wieder in ein frei fließendes Pulver überführt werden, welches sich dann wieder einfach entlang der Längsausdehnung der Verbundankerpatrone innerhalb des inneren zweiten Behälters verteilen lässt.

Es wurde überraschend gefunden, dass diese Eigenschaften durch geeignete Dimensionen des ersten Behälters und zweiten Behälters, insbesondere durch deren Länge, sowie die individuelle Füllhöhe optimiert werden können. Die erfindungsgemäßen Verbundankerpatronen gewährleisten auf diese Weise optimierte Festigkeiten sowohl bei horizontal angeordneten Bohrlöchern als auch bei vertikal angeordneten Bohrlöchern.

Sofern nicht ausdrücklich etwas anderes angegeben ist, sind alle Prozentangaben Gewichtsprozent (Gew.-%).

Der Ausdruck "*(Meth)acryl"* steht für "*Acryl oder Methacryl"* jeweils einzeln oder als Gemisch. Dies gilt sowohl für die freie (Meth)acrylsäure als auch für deren Derivate (z.B. Ester, Amide, etc.).

Der Ausdruck *"im Wesentlichen bestehend aus"* bedeutet, dass in einer Zusammensetzung neben den genannten, obligatorischen Bestandteilen weitere nicht genannte Bestandteile zugelassen sind, sofern sich die wesentlichen Merkmale der Zusammensetzung durch diese weiteren Bestandteile nicht signifikant ändern. Bevorzugt bedeutet der Ausdruck, dass die genannten, obligatorischen Bestandteile mindestens 98 Gew.-% der Zusammensetzung insgesamt ausmachen, bevorzugter mindestens 99 Gew.-%, noch bevorzugter mindestens 99,5 Gew.-%.

Sofern nicht ausdrücklich etwas anderes angegeben ist, beziehen sich alle Verweise auf Normen und Standards auf die offizielle Fassung, welche am 1. Mai 2024 gültig ist.

Eine *"Verbundankerpatrone"* im Sinne der Erfindung ist jede Patrone, welche ein Reaktivharz und einen Härter für das Reaktivharz enthält und welche dafür vorgesehen ist, in eine Öffnung eines Bausubstrats, insbesondere Beton, insbesondere in ein Bohrloch, eine Spalte oder dergleichen, eingebracht zu werden, und dort durch Aushärtung des Reaktivharzes infolge einer Vermischung von Reaktivharz und Härter ein Verankerungsmittel, insbesondere eine Schraube, Gewindestange oder dergleichen, zu verankern.

Bevorzugt wird bei bestimmungsgemäßer Verwendung die erfindungsgemäße Verbundankerpatrone zunächst in die Öffnung des Bausubstrats eingebracht. Anschließend wird ein geeignetes Befestigungsmittel (Befestigungselement, Verbundanker, Verankerungsmittel) in die Öffnung eingebracht und dadurch die Verbundankerpatrone zumindest beschädigt oder zerstört. Der erste Behälter sowie der zweite Behälter werden dadurch zumindest geöffnet oder zerstört, wodurch eine Vermischung von Reaktivharz und Härter ermöglicht wird.

Vor bestimmungsgemäßer Verwendung der erfindungsgemäßen Verbundankerpatrone liegen Reaktivharz und Härter räumlich getrennt voneinander vor. Dies wird mit Hilfe des ersten Behälters und des zweiten Behälters gewährleistet, wobei der zweite Behälter innerhalb des ersten Behälters vorliegen kann, was erfindungsgemäß bevorzugt ist.

Eine *"Patrone"* im Sinne der Erfindung ist bevorzugt in ihren Dimensionen, insbesondere Länge und Durchmesser, auf die Dimensionen der Öffnung des Bausubstrats sowie auf die Dimensionen des Verankerungsmittels abgestimmt. Erfindungsgemäß bevorzugt werden diese Dimensionen gemäß DIN 13 T1 klassifiziert, z.B. M8, M10, M12, M16, M20, M24, M30, etc. Diese Klassifizierung ist Fachleuten bekannt. Die Patrone kann grundsätzlich beliebige Gestaltung aufweisen, sofern sie die Anforderungen an die Dimensionen erfüllt. Sie kann starr oder flexibel sein, als Glaspatrone, Folienbeitel oder dergleichen vorliegen. Die erfindungsgemäße Verbundankerpatrone ist bevorzugt für eine einfache Anwendung mengenmäßig auf die gewünschte Größe eines Loches oder Spaltes bzw. auf die die Größe eines geeigneten Verankerungsmittels vorportioniert. Auf diese Weise fällt kein Abfall an, weil das vorhandene Material der Patrone als solches den Aushärtungsvorgang im entsprechenden Bohrloch nicht stört.

Ein *"partikulärer Härter"* im Sinne der Erfindung ist ein Feststoff aus einer Vielzahl von Partikeln, bevorzugt ein rieselfähiges Pulver.

Der erfindungsgemäße partikulärer Härter umfasst Dibenzoylperoxid und Ethylenglykoldibenzoat.

Dibenzoylperoxid (CAS 94-36-0) hat folgende Strukturformel:

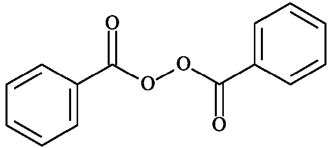

Ethylenglykoldibenzoat (CAS 94-49-5) hat folgende Strukturformel:

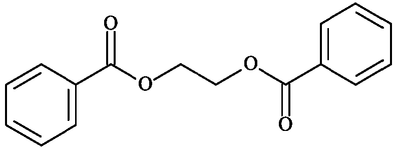

Im Sinne der Erfindung bedeutet *"phlegmatisiert",* dass das Dibenzoylperoxid im Härter durch das Ethylenglykoldibenzoat stabilisiert wird. Dazu können bevorzugt einzelne Partikel von Dibenzoylperoxid wenigstens teilweise von Ethylenglykoldibenzoat eingekapselt sein. Es ist jedoch auch möglich, dass Dibenzoylperoxid und Ethylenglykoldibenzoat als homogene Mischung vorliegen und die Partikel diese homogene Mischung umfassen. Die Phlegmatisierung des Dibenzoylperoxids mit dem Ethylenglykoldibenzoat führt dazu, dass die Lagerstabilität verbessert ist, im Vergleich zu reinem Dibenzoylperoxid.

Bevorzugt beträgt der Gehalt an Dibenzoylperoxid höchstens 49,4 Gew.-%, bezogen auf das Gesamtgewicht des Härters.

Bevorzugt liegt der Gehalt an Dibenzoylperoxid im Bereich von 40,0 bis 49,9 Gew.-%; bevorzugt 40,0 bis 49,4 Gew.-%, bevorzugter 40,0 bis 49,0 Gew.-%, noch bevorzugter 40,0 bis 48,0 Gew.-%, noch bevorzugter 40,0 bis 47,0 Gew.-%, am bevorzugtesten 40,0 bis 46,0 Gew.-%, und insbesondere 40,0 bis 45,0 Gew.-%, jeweils bezogen auf das Gesamtgewicht des Härters.

In bevorzugten Ausführungsformen liegt der Gehalt an Dibenzoylperoxid im Bereich von 45,0±5,0 Gew.-%, bevorzugt 45,0±4,5 Gew.-%, bevorzugter 45,0±4,0 Gew.-%, noch bevorzugter 45,0±3,5 Gew.-%, am bevorzugtesten 45,0±3,0 Gew.-%, und insbesondere 45,0±2,5 Gew.-%, jeweils bezogen auf das Gesamtgewicht des Härters.

Bevorzugt beträgt der Gehalt an Ethylenglykoldibenzoat mehr als 50,0 Gew.-%; bevorzugt 50,1 bis 60,0 Gew.-%, bevorzugter 50,6 bis 60,0 Gew.-%, noch bevorzugter 51,0 bis 60,0 Gew.-%, noch bevorzugter 52,0 bis 60,0 Gew.-%, noch bevorzugter 53,0 bis 60,0 Gew.-%, am bevorzugtesten 54,0 bis 60,0 Gew.-%, und insbesondere 55,0 bis 60,0 Gew.-%, jeweils bezogen auf das Gesamtgewicht des Härters.

In bevorzugten Ausführungsformen liegt der Gehalt an Ethylenglykoldibenzoat im Bereich von 55,0±5,0 Gew.-%, bevorzugt 55,0±4,5 Gew.-%, bevorzugter 55,0±4,0 Gew.-%, noch bevorzugter 55,0±3,5 Gew.-%, am bevorzugtesten 55,0±3,0 Gew.-%, und insbesondere 55,0±2,5 Gew.-%, jeweils bezogen auf das Gesamtgewicht des Härters.

Bevorzugt besteht der Härter im Wesentlichen aus Dibenzoylperoxid und Ethylenglykoldibenzoat.

In bevorzugten Ausführungsformen ist der zweite Behälter in dem ersten Innenraum angeordnet und der erste Innenraum enthält das Reaktivharz außerhalb des zweiten Behälters.

In anderen bevorzugten Ausführungsformen ist der zweite Behälter außerhalb des ersten Behälters angeordnet, bevorzugt im Wesentlichen parallel dazu.

Gemäß einer bevorzugt Variante sind in diesem Fall (d.h. bei im Wesentlichen paralleler Anordnung außerhalb voneinander) der erste Behälter sowie der zweite Behälter gemeinsam in einem dritten Behälter mit einem dritten Innenraum angeordnet. Bevorzugt ist der dritte Behälter aus einer Folie. Als Folie kommen insbesondere Kunststofffolien, Metallfolien und Laminate in Betracht. Bevorzugt ist der dritte Behälter vollständig verschlossen.

Gemäß einer anderen bevorzugten Variante sind in diesem Fall (d.h. bei im Wesentlichen paralleler Anordnung außerhalb voneinander) der erste Behälter sowie der zweite Behälter gemeinsam als Doppelkammerbehälter ausgestaltet, bevorzugt als Doppelkammerfolienbeutel, bei dem eine der beiden Kammern den ersten Behälter und die andere der beiden Kammern den zweite Behälter bildet. Bevorzugt ist der Doppelkammerbehälter aus einer Folie. Als Folie kommen insbesondere Kunststofffolien, Metallfolien und Laminate in Betracht. Bevorzugt ist der Doppelkammerbehälter vollständig verschlossen. Bevorzugt sind die beiden Kammern durch eine Siegelnaht voneinander getrennt.

Ein *"erster Behälter"* im Sinne der Erfindung ist jeder Gegenstand, der in seinem Inneren, nämlich dem *"ersten Innenraum"* einen Hohlraum aufweist, welcher zu dem Zweck dient, seinen Inhalt von der Umgebung (Umwelt) zu trennen.

Bevorzugt ist der erste Behälter aus Glas oder aus einer Folie, bevorzugter aus Glas. Als Folie kommen insbesondere Kunststofffolien, Metallfolien und Laminate in Betracht. Bevorzugt ist der erste Behälter vollständig verschlossen. Bei ersten Behältern aus Glas wird die erfindungsgemäß durch Abschmelzen, z.B. mit einer Gasflamme erreicht.

Bevorzugt ist der erste Behälter länglich. Bevorzugt ist die maximale Länge des ersten Behälters wenigstens 5mal länger als die dazu orthogonale, maximale Breite des ersten Behälters (z.B. sein Außendurchmesser).

Bevorzugt weist der erste Behälter entlang seiner Längsausdehnung einen kreisrunden Querschnitt auf. Bevorzugt ist der Durchmesser dieses kreisrunden Querschnitts über wenigstens 80% der Längsausdehnung des ersten Behälters konstant (röhrenförmig, Ampulle); bevorzugter wenigstens 85%, noch bevorzugter wenigstens 90%, am bevorzugtesten wenigstens 95%. Bevorzugt ist der Durchmesser dieses kreisrunden Querschnitts auf den Hohlraum im Bausubstrat abgestimmt, in den die Verbundankerpatrone bei bestimmungsgemäßer Anwendung eingebracht werden soll, z.B. auf den Durchmesser des Bohrlochs.

Erfindungsgemäß bevorzugte Maße des ersten Behälters sind in nachfolgender Tabelle zusammengestellt:

| [mm] | Länge | Außendurchmesser | bevorzugte Wandstärke |
|---|---|---|---|
| M8 | 85 ± 4 | 9,25 ± 0,13 | 0,45 ± 0,02 |
| M10 | 90 ± 4 | 10,75 ± 0,13 | 0,45 ± 0,02 |
| M12 | 95 ± 4 | 12,65 ± 0,13 | 0,45 ± 0,02 |
| M16 | 95 ± 4 | 16,75 ± 0,15 | 0,55 ± 0,03 |
| M20 | 145 ± 4 | 16,75 ± 0,15 | 0,55 ± 0,03 |
| M24 | 190 ± 6 | 23,0 ± 0,25 | 1,0 ± 0,04 |
| M30 | 240 ± 8 | 27,5± 0,25 | 1,1 ± 0,04 |

Bevorzugt weist der erste Innenraum eine Länge **L₁** auf, wobei in einer vertikalen Anordnung des ersten Behälters der erste Innenraum mit dem Reaktivharz, dem ggf. vorhandenen partikulären Füllstoff sowie dem ggf. vorhandenen zweiten Behälter bis zu einer Füllhöhe **F₁** befüllt ist, wobei **F₁** ≥ 0,64·**L₁**; bevorzugt **F₁** ≥ 0,66·**L₁**, bevorzugter **F₁** ≥ 0,68·**L₁**, noch bevorzugter **F₁** ≥ 0,70·**L₁**, am bevorzugtesten **F₁** ≥ 0,72·**L₁**, und insbesondere bevorzugt **F₁** ≥ 0,74·**L₁**. Bevorzugt ist **F₁** ≤ 0,95·**L₁**, bevorzugter **F₁** ≤ 0,90·**L₁**, noch bevorzugter **F₁** ≤ 0,85·**L₁**.

Die Füllhöhe **F₁** bezieht sich dabei auf das vorzugsweise flüssige Reaktivharz, in dem der ggf. vorhandene partikuläre Füllstoff bevorzugt suspendiert vorliegt. Sofern der zweite Behälter ebenfalls in den ersten Innenraum eingebracht wurde, ist es möglich, dass eines der Enden des zweiten Behälters oben aus der Suspension herausragt, d.h. nicht vollständig von Reaktivharz bedeckt ist. Auch in einem solchen Fall ergibt sich die Füllhöhe **F₁** aus dem Abstand der Flüssigkeitsoberfläche zum Boden des ersten Behälters.

Ein *"zweiter Behälter"* im Sinne der Erfindung ist entsprechend jeder Gegenstand, der in seinem Inneren, nämlich dem *"zweiten Innenraum"* einen Hohlraum aufweist, welcher zu dem Zweck dient, seinen Inhalt von der Umgebung (Umwelt) zu trennen.

Bevorzugt ist der zweite Behälter aus Glas oder aus einer Folie, bevorzugter aus Glas. Als Folie kommen insbesondere Kunststofffolien, Metallfolien und Laminate in Betracht. Bevorzugt ist der zweite Behälter vollständig verschlossen. Bei zweiten Behältern aus Glas wird die erfindungsgemäß durch Abschmelzen, z.B. mit einer Gasflamme erreicht.

Bevorzugt ist der zweite Behälter länglich. Bevorzugt ist die maximale Länge des zweiten Behälters wenigstens 15mal länger als die dazu orthogonale, maximale Breite des zweiten Behälters (z.B. sein Außendurchmesser).

Bevorzugt weist der zweite Behälter entlang seiner Längsausdehnung einen kreisrunden Querschnitt auf. Bevorzugt ist der Durchmesser dieses kreisrunden Querschnitts über wenigstens 80% der Längsausdehnung des zweiten Behälters konstant (röhrenförmig, Ampulle); bevorzugter wenigstens 85%, noch bevorzugter wenigstens 90%, am bevorzugtesten wenigstens 95%.

Erfindungsgemäß bevorzugte Maße des zweiten Behälters sind in nachfolgender Tabelle zusammengestellt:

| [mm] | Länge | Außendurchmesser | bevorzugte Wandstärke |
|---|---|---|---|
| M8 | 73 ± 4 | 4,0 ± 0,09 | 0,5 ± 0,02 |
| M10 | 77,5 ± 4 | 4,0 ± 0,09 | 0,5 ± 0,02 |
| M12 | 77,5 ± 4 | 4,0 ± 0,09 | 0,5 ± 0,02 |
| M16 | 80 ± 4 | 5,0 ± 0,09 | 0,5 ± 0,02 |
| M20 | 115 ± 4 | 5,0 ± 0,09 | 0,5 ± 0,02 |
| M24 | 158 ± 4 | 6,0 ± 0,1 | 0,6 ± 0,03 |
| M30 | 198± 6 | 7,0 ± 0,1 | 0,5 ± 0,03 |

Bevorzugt weist der zweite Innenraum eine Länge L₂ auf, wobei in einer vertikalen Anordnung des zweiten Behälters der zweite Innenraum mit dem Härter bis zu einer Füllhöhe **F₂** befüllt ist, wobei **F₂** ≥ 0,72·**L₂**; bevorzugt **F₂** ≥ 0,74·**L₂**, bevorzugter **F₂** ≥ 0,76·**L₂**, noch bevorzugter **F₂** ≥ 0,78·**L₂**, am bevorzugtesten **F₂** ≥ 0,80·**L₂**, und insbesondere bevorzugt **F₂** ≥ 0,82·**L₂**. Bevorzugt ist **F₂** ≤ 0,95·**L₂**, bevorzugter **F₂** ≤ 0,90·**L₂**.

Die Füllhöhe **F₂** bezieht sich dabei auf den partikulären Härter. Die Füllhöhe **F₂** aus dem Abstand der Oberfläche der Füllung zum Boden des zweiten Behälters.

Bevorzugt weist der erste Innenraum eine Länge **L₁** und der zweite Innenraum eine Länge **L₂** auf, wobei **L₁** > **L₂**.

Bevorzugt weist der erste Innenraum eine Länge **L₁** und der zweite Innenraum eine Länge **L₂** auf, wobei **L₂** ≥ 0,72·**L₁**; bevorzugt **L₂** ≥ 0,74·**L₁**, bevorzugter **L₂** ≥ 0,76·**L₁**, noch bevorzugter **L₂** ≥ 0,78·**L₁**, am bevorzugtesten **L₂** ≥ 0,80**·L₁**, und insbesondere bevorzugt **L₂** ≥ 0,82·**L₁**. Bevorzugt ist **L₂** ≤ 0,95·**L₁**, bevorzugter **L₂** ≤ 0,90·**L₁**.

Bevorzugt ist in einer vertikalen Anordnung des ersten Behälters der erste Innenraum mit dem Reaktivharz, dem ggf. vorhandenen partikulären Füllstoff sowie dem ggf. vorhandenen zweiten Behälter bis zu einer Füllhöhe **F₁** befüllt; und in einer vertikalen Anordnung des zweiten Behälters der zweite Innenraum mit dem Härter bis zu einer Füllhöhe **F₂** befüllt, wobei **F₁** ≥ **F₂**.

Bevorzugt beträgt das Gewichtsverhältnis von Reaktivharz zu Dibenzoylperoxid des Härters mindestens 10; bevorzugt mindestens 12, bevorzugter mindestens 14, noch bevorzugter mindestens 16, am bevorzugtesten mindestens 18 und insbesondere mindestens 20; bevorzugt höchstens 40.

Bevorzugt beträgt das Gewichtsverhältnis von Reaktivharz (6) zu Dibenzoylperoxid des Härters (7) für eine Verbundankerpatrone zur Verankerung eines Verankerungsmittels (z.B. einer Gewindestange) mit einem Außendurchmesser gemäß DIN 13, T1 vom
- Typ M8 mindestens 10,0; bevorzugt mindestens 10,5, bevorzugter mindestens 11,0, noch bevorzugter mindestens 11,5, am bevorzugtesten mindestens 12,0 und insbesondere mindestens 12,5; bevorzugt höchstens 15;
- Typ M10 mindestens 14; bevorzugt mindestens 15, bevorzugter mindestens 16, noch bevorzugter mindestens 17, am bevorzugtesten mindestens 18 und insbesondere mindestens 19; bevorzugt höchstens 25;
- Typ M12 mindestens 21; bevorzugt mindestens 22, bevorzugter mindestens 23, noch bevorzugter mindestens 24, am bevorzugtesten mindestens 25 und insbesondere mindestens 26; bevorzugt höchstens 30;
- Typ M16 mindestens 20; bevorzugt mindestens 21, bevorzugter mindestens 22, noch bevorzugter mindestens 23, am bevorzugtesten mindestens 24 und insbesondere mindestens 25; bevorzugt höchstens 30;
- Typ M20 mindestens 16,0; bevorzugt mindestens 16,5, bevorzugter mindestens 17,0, noch bevorzugter mindestens 17,5, am bevorzugtesten mindestens 18,0 und insbesondere mindestens 18,5; bevorzugt höchstens 25; und/oder
- Typ M24 mindestens 24; bevorzugt mindestens 26, bevorzugter mindestens 28, noch bevorzugter mindestens 30, am bevorzugtesten mindestens 32 und insbesondere mindestens 34 bevorzugt höchstens 40.

Bevorzugt beträgt das molare Verhältnis aller ethylenisch ungesättigten Gruppen des Reaktivharzes zu Dibenzoylperoxid des Härters mindestens 10; bevorzugt mindestens 12, bevorzugter mindestens 14, noch bevorzugter mindestens 16, am bevorzugtesten mindestens 18 und insbesondere mindestens 20. Bevorzugt beträgt das molare Verhältnis aller ethylenisch ungesättigten Gruppen des Reaktivharzes zu Dibenzoylperoxid des Härters mindestens 22; bevorzugt mindestens 24, bevorzugter mindestens 26, noch bevorzugter mindestens 28, am bevorzugtesten mindestens 30 und insbesondere mindestens 32; bevorzugt höchstens 55.

Bevorzugt beträgt das molare Verhältnis aller ethylenisch ungesättigten Gruppen des Reaktivharzes (6) zu Dibenzoylperoxid des Härters (7) für eine Verbundankerpatrone zur Verankerung eines Verankerungsmittels (z.B. einer Gewindestange) mit einem Außendurchmesser gemäß DIN 13, T1 vom
- Typ M8 mindestens 15,0; bevorzugt mindestens 15,5, bevorzugter mindestens 16,0, noch bevorzugter mindestens 16,5, am bevorzugtesten mindestens 17,0 und insbesondere mindestens 17,5; bevorzugt höchstens 25;
- Typ M10 mindestens 17; bevorzugt mindestens 19, bevorzugter mindestens 21, noch bevorzugter mindestens 23, am bevorzugtesten mindestens 25 und insbesondere mindestens 27; bevorzugt höchstens 35;
- Typ M12 mindestens 26; bevorzugt mindestens 28, bevorzugter mindestens 30, noch bevorzugter mindestens 32, am bevorzugtesten mindestens 34 und insbesondere mindestens 36; bevorzugt höchstens 40;
- Typ M16 mindestens 30; bevorzugt mindestens 31, bevorzugter mindestens 32, noch bevorzugter mindestens 33, am bevorzugtesten mindestens 34 und insbesondere mindestens 35; bevorzugt höchstens 40;
- Typ M20 mindestens 24; bevorzugt mindestens 26, bevorzugter mindestens 28, noch bevorzugter mindestens 30, am bevorzugtesten mindestens 32 und insbesondere mindestens 34; bevorzugt höchstens 40; und/oder
- Typ M24 mindestens 38; bevorzugt mindestens 40, bevorzugter mindestens 42, noch bevorzugter mindestens 44, am bevorzugtesten mindestens 46 und insbesondere mindestens 48; bevorzugt höchstens 55.

Bevorzugt weist der Härter eine Partikelgrößenverteilung mit einem D₅₀-Wert von mehr als 300 µm auf; bevorzugt mindestens 325 µm, bevorzugter mindestens 350 µm, noch bevorzugter mindestens 375 µm, am bevorzugtesten mindestens 400 µm, und insbesondere mindestens 425 µm, wobei der D₅₀-Wert jeweils durch Siebanalyse als Trockensiebung gemäß DIN 66165 bestimmt wird.

Bevorzugt liegt der D₅₀-Wert im Bereich von mehr als 300 bis 710 µm; bevorzugt 350 bis 710 µm.

In bevorzugten Ausführungsformen liegt der D₅₀-Wert im Bereich von 400±90 µm; bevorzugt 400±80 µm, bevorzugter 400±70 µm, noch bevorzugter 400±60 µm, am bevorzugtesten 400±50 µm, und insbesondere 400±40 µm.

In bevorzugten Ausführungsformen liegt der D₅₀-Wert im Bereich von 500±190 µm; bevorzugt 500±175 µm, bevorzugter 500±150 µm, noch bevorzugter 500±125 µm, am bevorzugtesten 500±100 µm, und insbesondere 500±75 µm.

In bevorzugten Ausführungsformen liegt der D₅₀-Wert im Bereich von 600±190 µm; bevorzugt 600±175 µm, bevorzugter 600±150 µm, noch bevorzugter 600±125 µm, am bevorzugtesten 600±100 µm, und insbesondere 600±75 µm.

Bevorzugt weist der Härter eine Partikelgrößenverteilung mit einem D₉₀-Wert von mehr als 50 µm auf; bevorzugt mindestens 75 µm, bevorzugter mindestens 100 µm, noch bevorzugter mindestens 125 µm, am bevorzugtesten mindestens 150 µm, und insbesondere mindestens 175 µm, wobei der D₉₀-Wert jeweils durch Siebanalyse als Trockensiebung gemäß DIN 66165 bestimmt wird.

Bevorzugt ist das Reaktivharz bei 23°C flüssig.

Ein *"Reaktivharz"* im Sinne der Erfindung ist radikalisch polymerisierbar, wobei das Dibenzoylperoxid als Radikalstarter die radikalische Polymerisation induzieren kann. Radikalisch polymerisierbare Reaktivharze umfassen radikalisch härtende Materialien, die als radikalisch aushärtende Komponenten (vor der Aushärtung) organische Verbindungen mit ethylenisch ungesättigten Gruppen umfassen.

*"Ethylenisch ungesättigte Gruppen"* im Sinne der Erfindung umfassen beispielsweise olefinische Gruppen, insbesondere Vinylgruppen, sowie (Meth)acrylat-Gruppen.

Bevorzugt umfassen die ethylenisch ungesättigten Gruppen des Reaktivharzes Acrylat- und/oder Methacrylat-Gruppen oder bestehen im Wesentlichen daraus.

Das Reaktivharz kann im Wesentlichen aus einer einzelnen Komponente bestehen, umfasst bevorzugt jedoch ein Gemisch mehrerer Komponenten, welche allesamt ethylenisch ungesättigte Gruppen umfassen, d.h. bei der radikalischen Polymerisation umgesetzt werden können.

Zum Zwecke der Beschreibung sind alle Komponenten des Gemischs, welche ethylenisch ungesättigte Gruppen enthalten, dem Reaktivharz zuzurechnen. Das Gesamtgewicht des Reaktivharzes ergibt sich aus der Summe der Einzelgewichte dieser Komponenten. Sofern das Gemisch weitere Komponenten enthält, welche keine ethylenisch ungesättigten Gruppen enthalten und nicht bei der radikalischen Polymerisation umgesetzt werden können, werden diese nicht dem Reaktivharz zugerechnet. Beispiele für solche weiteren Komponenten ohne ethylenisch ungesättigte Gruppen sind inerte Lösemittel. Beschleuniger und Inhibitor werden zum Zwecke der Beschreibung ebenso als separate Komponenten betrachtet, d.h. nicht als Komponenten des Reaktivharzes.

Das Reaktivharz kann reaktionsfähige Präpolymere, reaktionsfähige niedermolekulare Komponenten (Monomere, Reaktivverdünner) sowie deren Mischungen umfassen.

Bevorzugt ist das Reaktivharz ein reaktionsfähiges (Meth)acrylharz oder ein reaktionsfähiges Vinylesterharz. Auch Mischungen sind möglich.

(Meth)acrylharze können durch Homopolymerisation oder Copolymerisation von (Meth)acrylsäure und/oder deren Estern und/oder deren Amiden gewonnen werden. Als Copolymere können ungesättigten Monomere, wie Styrol, Vinylester oder (Meth)acrylnitril eingesetzt werden.

Die (Meth)acrylharze sind im noch nicht ausgehärteten Zustand reaktionsfähig, da sie noch Doppelbindungen der (Meth)acrylsäure, (Meth)acrylsäureester und/oder (Meth)acrylamide enthalten.

Reaktionsfähige (Meth)acrylsäureester ((Meth)acrylate) umfassen z.B. Mono-, Di-, Tri- oder Poly(meth)acrylate, Hydroxyethyl(meth)acrylat, Hydroxypropyl(meth)acrylat, Ethylenglykoldi(meth)-acrylat, Butandioldi(meth)acrylat, Hexandioldi(meth)acrylat, etc.

Bevorzugt umfasst das Reaktivharz eine oder mehrere Komponenten mit zwei (Meth)acrylGruppen, bevorzugt im Gemisch mit einer oder mehreren Komponenten mit einer einzelnen (Meth)acryl-Gruppe und/oder im Gemisch mit einer oder mehreren Komponenten mit drei (Meth)acryl-Gruppen.

In bevorzugten Ausführungsformen enthält das Reaktivharz eine oder mehrere reaktionsfähige niedermolekulare Komponenten (Monomere, Reaktivverdünner), bevorzugt ausgewählt aus Styrol, alpha-Methylstyrol, Divinylbenzol, (Meth)acrylamid, Methyl(meth)acrylat, Ethyl(meth)acrylat, Propyl(meth)acrylat, Butyl(meth)acrylat, Ethylhexyl(meth)acrylat, Neopentylglykol(meth)acrylat, Ethylenglykoldi(meth)acrylat, Diethylenglykoldi(meth)acrylat, Triethylenglykol(meth)acrylat, Propylenglykoldi(meth)acrylat, Butandioldi(meth)acrylat, Glycerin(meth)acrylat, Hydroxyethyl(meth)acrylat, Hydroxypropyl(meth)acrylat, Propylidintrimethyltri(meth)acrylat, Acetoacetatoethyl(meth)acrylat und Mischungen daraus.

Bevorzugt enthält das Reaktivharz mindestens eine Komponente, welche sich von einem Bisphenol ableitet, bevorzugt Bisphenol A oder Bisphenol F, bevorzugter Bisphenol A. Bevorzugt handelt es sich dabei um ein Präpolymer.

Bevorzugte reaktionsfähige (Meth)acrylharze enthalten Präpolymere auf Basis von Bisphenoldiglycidylether Epoxidharzen, welche terminal mit (Meth)acrylsäure verestert sind. Solche mitunter auch als *"Epoxy(meth)acrylate"* bezeichnete Präpolymere basieren bevorzugt auf Bisphenol A und haben bevorzugt folgende Struktur: 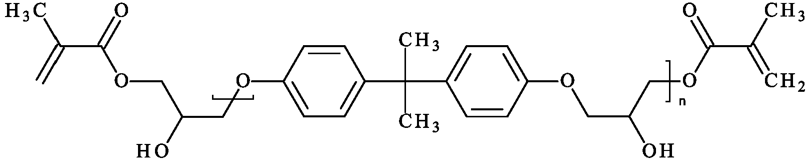 worin n für eine Zahl größer oder gleich 1 steht (wenn Gemische verschiedener Moleküle mit unterschiedlichen n-Werten vorliegen und durch die Formel repräsentiert werden, sind auch nicht-ganzzahlige Zahlen als Mittelwert möglich).

Besonders bevorzugte reaktionsfähige (Meth)acrylharze enthalten Präpolymere auf Basis von ethoxylierten oder propoxylierten Bisphenolen, welche terminal mit (Meth)acrylsäure verestert sind. Solche reaktionsfähige (Meth)acrylharze basieren bevorzugt auf Bisphenol A und haben, sofern sie ethoxyliert sind, bevorzugt folgende Struktur: 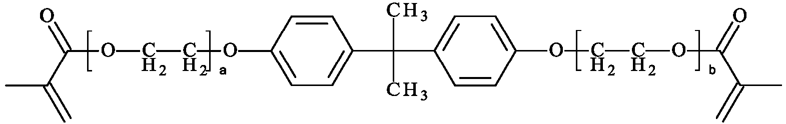 worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind (wenn Gemische verschiedener Moleküle mit unterschiedlichen (a- und b-)Werten vorliegen und durch die Formel repräsentiert werden, sind auch nicht-ganzzahlige Zahlen als Mittelwert möglich). Bevorzugt ist die Summe von a+b 2 oder 3 oder ein Wert dazwischen (Gemisch).

Bevorzugt enthält das Reaktivharz ethoxyliertes Bisphenol-A-Dimethacrylat (CAS 41637-38-1).

Bevorzugt beträgt der Gehalt des ethoxylierten Bisphenol-A-Dimethacrylats mindestens 10 Gew.-%; bevorzugt mindestens 15 Gew.-%, bevorzugter mindestens 20 Gew.-%, noch bevorzugter mindestens 25 Gew.-%, am bevorzugtesten mindestens 30 Gew.-%, und insbesondere mindestens 35 Gew.-%, jeweils bezogen auf das Gesamtgewicht des Reaktivharzes.

Bevorzugt beträgt der Gehalt des ethoxylierten Bisphenol-A-Dimethacrylats höchstens 80 Gew.-%; bevorzugt höchstens 75 Gew.-%, bevorzugter höchstens 70 Gew.-%, noch bevorzugter höchstens 65 Gew.-%, am bevorzugtesten höchstens 60 Gew.-%, und insbesondere höchstens 55 Gew.-%, jeweils bezogen auf das Gesamtgewicht des Reaktivharzes.

Bevorzugt enthält das Reaktivharz 1,6-Hexandiylbismethacrylat (CAS 6606-59-3, 1,6-Hexandioldimethacrylat).

Bevorzugt beträgt der Gehalt des 1,6-Hexandioldimethacrylats mindestens 7,5 Gew.-%; bevorzugt mindestens 10 Gew.-%, bevorzugter mindestens 12,5 Gew.-%, noch bevorzugter mindestens 15 Gew.-%, am bevorzugtesten mindestens 17,5 Gew.-%, und insbesondere mindestens 20 Gew.-%, jeweils bezogen auf das Gesamtgewicht des Reaktivharzes.

Bevorzugt beträgt der Gehalt des 1,6-Hexandioldimethacrylats höchstens 37,5 Gew.-%; bevorzugt höchstens 35 Gew.-%, bevorzugter höchstens 32,5 Gew.-%, noch bevorzugter höchstens 30 Gew.-%, am bevorzugtesten höchstens 27,5 Gew.-%, und insbesondere höchstens 25 Gew.-%, jeweils bezogen auf das Gesamtgewicht des Reaktivharzes.

Bevorzugt enthält das Reaktivharz Methacrylsäure Monoester mit Propan-1,2-diol (CAS 27813-02-1, Hydroxypropylmethacrylat).

Bevorzugt beträgt der Gehalt des Hydroxypropylmethacrylats mindestens 5,0 Gew.-%; bevorzugt mindestens 7,5 Gew.-%, bevorzugter mindestens 10 Gew.-%, noch bevorzugter mindestens 12,5 Gew.-%, am bevorzugtesten mindestens 15 Gew.-%, und insbesondere mindestens 17,5 Gew.-%, jeweils bezogen auf das Gesamtgewicht des Reaktivharzes.

Bevorzugt beträgt der Gehalt des Hydroxypropylmethacrylats höchstens 32,5 Gew.-%; bevorzugt höchstens 30 Gew.-%, bevorzugter höchstens 27,5 Gew.-%, noch bevorzugter höchstens 25 Gew.-%, am bevorzugtesten höchstens 22,5 Gew.-%, und insbesondere höchstens 20 Gew.-%, jeweils bezogen auf das Gesamtgewicht des Reaktivharzes.

Bevorzugt enthält das Reaktivharz Propylidintrimethyltrimethacrylat (CAS 3290-92-4, Trimethylolpropantrimethacrylat).

Bevorzugt beträgt der Gehalt des Trimethylolpropantrimethacrylats mindestens 1,5 Gew.-%; bevorzugt mindestens 3,0 Gew.-%, bevorzugter mindestens 4,5 Gew.-%, noch bevorzugter mindestens 6,0 Gew.-%, am bevorzugtesten mindestens 7,5 Gew.-%, und insbesondere mindestens 9,0 Gew.-%, jeweils bezogen auf das Gesamtgewicht des Reaktivharzes.

Bevorzugt beträgt der Gehalt des Trimethylolpropantrimethacrylats höchstens 22,5 Gew.-%; bevorzugt höchstens 20 Gew.-%, bevorzugter höchstens 17,5 Gew.-%, noch bevorzugter höchstens 15 Gew.-%, am bevorzugtesten höchstens 12,5 Gew.-%, und insbesondere höchstens 10 Gew.-%, jeweils bezogen auf das Gesamtgewicht des Reaktivharzes.

Bevorzugt enthält das Reaktivharz ein reaktionsfähiges, d.h. copolymerisierbares Silan. Geeignete reaktionsfähige Silane sind beispielsweise in WO 2011/072789 A1 offenbart. Vorzugsweise enthält das Silan eine (Meth)acryl-Gruppe sowie drei Alkoxygruppen, bevorzugt Methoxy- und/oder Ethoxygruppen. Methacryloxypropyltrimethoxysilan ist besonders bevorzugt.

Bevorzugt beträgt der Gehalt des reaktionsfähigen Silans, bevorzugt Methacryloxypropyltrimethoxysilan, im Bereich von 20±15 Gew.-%; bevorzugt 20±12,5 Gew.-%, bevorzugter 20±10 Gew.-%, noch bevorzugter 20±7,5 Gew.-%, am bevorzugtesten 20±5,0 Gew.-%, und insbesondere 20±2,5 Gew.-%, jeweils bezogen auf das Gesamtgewicht des Reaktivharzes.

In bevorzugten Ausführungsformen liegt der Gehalt an Reaktivharz für eine Verbundankerpatrone zur Verankerung eines Verankerungsmittels (z.B. einer Gewindestange) mit einem Außendurchmesser gemäß DIN 13, T1 vom
- Typ M8 im Bereich von 1,6 g ±90 Gew.-% (d.h. 1,60 g ± 1,44 g, also 0,16 bis 3,04 g); bevorzugt 1,6 g ±70 Gew.-%, bevorzugter 1,6 g ±50 Gew.-%, noch bevorzugter 1,6 g ±30 Gew.-%, am bevorzugtesten 1,6 g ±20 Gew.-%, und insbesondere 1,6 g ±10 Gew.-%;
- Typ M10 im Bereich von 2,3 g ±90 Gew.-%; bevorzugt 2,3 g ±70 Gew.-%, bevorzugter 2,3 g ±50 Gew.-%, noch bevorzugter 2,3 g ±30 Gew.-%, am bevorzugtesten 2,3 g ±20 Gew.-%, und insbesondere 2,3 g ±10 Gew.-%;
- Typ M12 im Bereich von 3,6 g ±90 Gew.-%; bevorzugt 3,6 g ±70 Gew.-%, bevorzugter 3,6 g ±50 Gew.-%, noch bevorzugter 3,6 g ±30 Gew.-%, am bevorzugtesten 3,6 g ±20 Gew.-%, und insbesondere 3,6 g ±10 Gew.-%;
- Typ M16 im Bereich von 6,2 g ±90 Gew.-%; bevorzugt 6,2 g ±70 Gew.-%, bevorzugter 6,2 g ±50 Gew.-%, noch bevorzugter 6,2 g ±30 Gew.-%, am bevorzugtesten 6,2 g ±20 Gew.-%, und insbesondere 6,2 g ±10 Gew.-%;
- Typ M20 im Bereich von 10,7 g ±90 Gew.-%; bevorzugt 10,7 g ±70 Gew.-%, bevorzugter 10,7 g ±50 Gew.-%, noch bevorzugter 10,7 g ±30 Gew.-%, am bevorzugtesten 10,7 g ±20 Gew.-%, und insbesondere 10,7 g ±10 Gew.-%; und/oder
- Typ M24 im Bereich von 24,3 g ±90 Gew.-%; bevorzugt 24,3 g ±70 Gew.-%, bevorzugter 24,3 g ±50 Gew.-%, noch bevorzugter 24,3 g ±30 Gew.-%, am bevorzugtesten 24,3 g ±20 Gew.-%, und insbesondere 24,3 g ±10 Gew.-%; und/oder
- Typ M30 im Bereich von 50,0 g ±90 Gew.-%; bevorzugt 50,0 g ±70 Gew.-%, bevorzugter 50,0 g ±50 Gew.-%, noch bevorzugter 50,0 g ±30 Gew.-%, am bevorzugtesten 50,0 g ±20 Gew.-%, und insbesondere 50,0 g ±10 Gew.-%.

Das Reaktivharz kann inerte Lösemittel enthalten, beispielsweise Ethylenglykol oder Glycerin.

Bevorzugt ist die erfindungsgemäße Verbundankerpatrone jedoch vollständig frei oder zumindest weitgehend frei von inerten Lösemitteln. Insbesondere ist es bevorzugt, dass die erfindungsgemäße Verbundankerpatrone vollständig oder zumindest weitgehend frei von Wasser ist.

*"Zumindest weitgehend frei"* bedeutet, dass zwar noch Spuren oder kleine Mengen der entsprechenden Verbindung vorhanden sein können, diese betragen jedoch nicht mehr als 1,0 Gew.-%, bevorzugt nicht mehr als 0,1 Gew.-%, bevorzugter nicht mehr als 0,01 Gew.-%, jeweils bezogen auf das Gesamtgewicht der Verbundankerpatrone.

Bevorzugt enthält der erste Innenraum neben dem Reaktivharz sowie dem ggf. vorhandenen zweiten Behälter einen partikulären Füllstoff.

Geeignete Füllstoffe sind Fachleuten bekannt. Erfindungsgemäß bevorzugte Füllstoffe sind Quarz, Sand, Korund, Talkum, Keramik, Tonerde, Glas, Zement, Leichtspat und/oder Schwerspat, vorzugsweise Quarz. Bevorzugt ist der Füllstoff mit dem Reaktivharz vermischt. Bevorzugt ist der Füllstoff in flüssigem Reaktivharz suspendiert.

Die mittlere Partikelgröße des Füllstoffs ist bevorzugt größer als die mittlere Partikelgröße des partikulären Härters (jeweils ausgedrückt als Partikelgrößenverteilung mit einem D₅₀-Wert; vgl. oben).

Das Reaktivharz kann mit üblichen Additiven vermischt sein, insbesondere Stabilisatoren und/oder Beschleunigern. Geeignete Substanzen hängen von der jeweiligen chemischen Natur des Reaktivharzes ab und sind Fachleuten bekannt.

Ein weiterer Aspekt der Erfindung betrifft einen Kit, welcher eine erfindungsgemäße, vorstehend beschriebene Verbundankerpatrone sowie ein Befestigungsmittel (Befestigungselement, Verbundanker, Verankerungsmittel) umfasst.

Ein weiterer Aspekt der Erfindung betrifft die Verwendung der erfindungsgemäßen, vorstehend beschriebenen Verbundankerpatrone zum Verankern (zur Befestigung, zum Verkleben) eines Befestigungsmittels (Befestigungselements, Verbundankers, Verankerungsmittels) in einem Hohlraum eines Bausubstrats, insbesondere Beton, insbesondere in einem Bohrloch oder einer Spalte.

Ein weiterer Aspekt der Erfindung betrifft ein Verfahren zum Verankern (zur Befestigung, zum Verkleben) eines Befestigungsmittels (Befestigungselements, Verbundankers, Verankerungsmittels) in einem Hohlraum eines Bausubstrats, insbesondere Beton, insbesondere in einem Bohrloch oder einer Spalte, umfassend die Schritte:
(a) Einbringen einer erfindungsgemäßen, vorstehend beschriebenen Verbundankerpatrone in den Hohlraum;
(b) Einbringen des Befestigungsmittels (Befestigungselements, Verbundankers, Verankerungsmittels) in den Hohlraum;
(c) Vermischen des Reaktivharzes mit dem Härter, wodurch ein Aushärten erfolgt.

Schritte (b) und (c) erfolgen bevorzugt simultan.

Erfindungsgemäß bevorzugte Befestigungsmittel umfassen jeweils Schrauben, Gewindestangen, Ankerstangen mit Gewinde oder Konen, und dergleichen.

Bevorzugt wird in Schritt (b) das Befestigungselement mit einem Bohrhammer drehend-schlagend gesetzt, wobei bevorzugt ein zugehöriges Setzwerkzeug verwendet wird.

Die erfindungsgemäße Verbundankerpatrone wird bevorzugt angewendet für Stahlkonstruktionen, Geländer, Treppen, Stützenfüße, Maschinen, Masten, demontierbare Befestigungen, temporäre Befestigungen (z.B. Maschinen), Gerüstverankerungen.

In bevorzugten Ausführungsformen erfolgt die Anwendung der erfindungsgemäßen Verbundankerpatrone durch Überkopfmontage.

In bevorzugten Ausführungsformen erfolgt die Anwendung der erfindungsgemäßen Verbundankerpatrone in wassergefüllten Bohrlöchern.

Als Bausubstrate (Baustoffe) erfolgt die Anwendung der erfindungsgemäßen Verbundankerpatrone bevorzugt in Beton C20/25 bis C50/60, welcher jeweils gerissen und ungerissen sein kann. Außerdem kann die Anwendung in Naturstein mit dichtem Gefüge erfolgen.

In bevorzugten Ausführungsformen erfolgt die Anwendung der erfindungsgemäßen Verbundankerpatrone nach Bohrlochreinigung.

In anderen bevorzugten Ausführungsformen erfolgt die Anwendung der erfindungsgemäßen Verbundankerpatrone ohne Bohrlochreinigung.

Besonders bevorzugte Ausführungsformen der Erfindung werden nachfolgend als Sätze 1 bis 50 zusammengefasst:
Satz 1: Eine Verbundankerpatrone (1) umfassend (i) einen ersten Behälter (2) mit einem ersten Innenraum (3), welcher ein Reaktivharz (6) mit ethylenisch ungesättigten Gruppen enthält; und (ii) einen zweiten Behälter (4) mit einem zweiten Innenraum (5), welcher einen partikulären Härter (7) enthält; wobei der Härter (7) Dibenzoylperoxid umfasst, das mit Ethylenglykoldibenzoat phlegmatisiert ist, und wobei der Gehalt an Dibenzoylperoxid weniger als 50,0 Gew.-% beträgt, bezogen auf das Gesamtgewicht des Härters (7).
Satz 2: Die Verbundankerpatrone nach Satz 1, wobei der Gehalt an Dibenzoylperoxid höchstens 49,4 Gew.-% beträgt, bezogen auf das Gesamtgewicht des Härters (7).
Satz 3: Die Verbundankerpatrone nach Satz 1 oder 2, wobei der Gehalt an Dibenzoylperoxid im Bereich von 40,0 bis 49,9 Gew.-% liegt; bevorzugt 40,0 bis 49,4 Gew.-%, bevorzugter 40,0 bis 49,0 Gew.-%, noch bevorzugter 40,0 bis 48,0 Gew.-%, noch bevorzugter 40,0 bis 47,0 Gew.-%, am bevorzugtesten 40,0 bis 46,0 Gew.-%, und insbesondere 40,0 bis 45,0 Gew.-%, jeweils bezogen auf das Gesamtgewicht des Härters (7).
Satz 4: Die Verbundankerpatrone nach einem der vorstehenden Sätze, wobei der Gehalt an Dibenzoylperoxid im Bereich von 45,0±5,0 Gew.-% liegt; bevorzugt 45,0±4,5 Gew.-%, bevorzugter 45,0±4,0 Gew.-%, noch bevorzugter 45,0±3,5 Gew.-%, am bevorzugtesten 45,0±3,0 Gew.-%, und insbesondere 45,0±2,5 Gew.-%, jeweils bezogen auf das Gesamtgewicht des Härters
Satz 5: Die Verbundankerpatrone nach einem der vorstehenden Sätze, wobei der Gehalt an Ethylenglykoldibenzoat mehr als 50,0 Gew.-% beträgt; bevorzugt 50,1 bis 60,0 Gew.-%, bevorzugter 50,6 bis 60,0 Gew.-%, noch bevorzugter 51,0 bis 60,0 Gew.-%, noch bevorzugter 52,0 bis 60,0 Gew.-%, noch bevorzugter 53,0 bis 60,0 Gew.-%, am bevorzugtesten 54,0 bis 60,0 Gew.-%, und insbesondere 55,0 bis 60,0 Gew.-%, jeweils bezogen auf das Gesamtgewicht des Härters (7).
Satz 6: Die Verbundankerpatrone nach einem der vorstehenden Sätze, wobei der Gehalt an Ethylenglykoldibenzoat im Bereich von 55,0±5,0 Gew.-% liegt; bevorzugt 55,0±4,5 Gew.-%, bevorzugter 55,0±4,0 Gew.-%, noch bevorzugter 55,0±3,5 Gew.-%, am bevorzugtesten 55,0±3,0 Gew.-%, und insbesondere 55,0±2,5 Gew.-%, jeweils bezogen auf das Gesamtgewicht des Härters
Satz 7: Die Verbundankerpatrone nach einem der vorstehenden Sätze, wobei der Härter (7) im Wesentlichen aus Dibenzoylperoxid und Ethylenglykoldibenzoat besteht.
Satz 8: Die Verbundankerpatrone nach einem der vorstehenden Sätze, wobei der zweite Behälter (4) in dem ersten Innenraum (3) angeordnet ist und wobei der erste Innenraum (3) das Reaktivharz (6) außerhalb des zweiten Behälters (4) enthält.
Satz 9: Die Verbundankerpatrone nach einem der vorstehenden Sätze, wobei der erste Behälter (2) aus Glas oder eine Folie ist, bevorzugt aus Glas.
Satz 10: Die Verbundankerpatrone nach einem der vorstehenden Sätze, wobei der zweite Behälter (4) aus Glas oder eine Folie ist, bevorzugt aus Glas.
Satz 11: Die Verbundankerpatrone nach einem der vorstehenden Sätze, wobei das Gewichtsverhältnis von Reaktivharz (6) zu Dibenzoylperoxid des Härters (7) mindestens 10 beträgt; bevorzugt mindestens 12, bevorzugter mindestens 14, noch bevorzugter mindestens 16, am bevorzugtesten mindestens 18 und insbesondere mindestens 20.
Satz 12: Die Verbundankerpatrone nach einem der vorstehenden Sätze, wobei das Gewichtsverhältnis von Reaktivharz (6) zu Dibenzoylperoxid des Härters (7) für eine Verbundankerpatrone zur Verankerung eines Verankerungsmittels mit einem Außendurchmesser gemäß DIN 13, T1 vom (a) Typ M8 mindestens 10,0 beträgt; bevorzugt mindestens 10,5, bevorzugter mindestens 11,0, noch bevorzugter mindestens 11,5, am bevorzugtesten mindestens 12,0 und insbesondere mindestens 12,5; (b) Typ M10 mindestens 14 beträgt; bevorzugt mindestens 15, bevorzugter mindestens 16, noch bevorzugter mindestens 17, am bevorzugtesten mindestens 18 und insbesondere mindestens 19; (c) Typ M12 mindestens 21 beträgt; bevorzugt mindestens 22, bevorzugter mindestens 23, noch bevorzugter mindestens 24, am bevorzugtesten mindestens 25 und insbesondere mindestens 26; (d) Typ M16 mindestens 20 beträgt; bevorzugt mindestens 21, bevorzugter mindestens 22, noch bevorzugter mindestens 23, am bevorzugtesten mindestens 24 und insbesondere mindestens 25; (e) Typ M20 mindestens 16,0 beträgt; bevorzugt mindestens 16,5, bevorzugter mindestens 17,0, noch bevorzugter mindestens 17,5, am bevorzugtesten mindestens 18,0 und insbesondere mindestens 18,5; und/oder (f) Typ M24 mindestens 24 beträgt; bevorzugt mindestens 26, bevorzugter mindestens 28, noch bevorzugter mindestens 30, am bevorzugtesten mindestens 32 und insbesondere mindestens 34.
Satz 13: Die Verbundankerpatrone nach einem der vorstehenden Sätze, wobei das molare Verhältnis aller ethylenisch ungesättigten Gruppen des Reaktivharzes (6) zu Dibenzoylperoxid des Härters (7) mindestens 10 beträgt; bevorzugt mindestens 12, bevorzugter mindestens 14, noch bevorzugter mindestens 16, am bevorzugtesten mindestens 18 und insbesondere mindestens 20.
Satz 14: Die Verbundankerpatrone nach einem der vorstehenden Sätze, wobei das molare Verhältnis aller ethylenisch ungesättigten Gruppen des Reaktivharzes (6) zu Dibenzoylperoxid des Härters (7) mindestens 22 beträgt; bevorzugt mindestens 24, bevorzugter mindestens 26, noch bevorzugter mindestens 28, am bevorzugtesten mindestens 30 und insbesondere mindestens 32.
Satz 15: Die Verbundankerpatrone nach einem der vorstehenden Sätze, wobei das molare Verhältnis aller ethylenisch ungesättigten Gruppen des Reaktivharzes (6) zu Dibenzoylperoxid des Härters (7) für eine Verbundankerpatrone zur Verankerung eines Verankerungsmittels mit einem Außendurchmesser gemäß DIN 13, T1 vom (a) Typ M8 mindestens 15,0 beträgt; bevorzugt mindestens 15,5, bevorzugter mindestens 16,0, noch bevorzugter mindestens 16,5, am bevorzugtesten mindestens 17,0 und insbesondere mindestens 17,5; (b) Typ M10 mindestens 17 beträgt; bevorzugt mindestens 19, bevorzugter mindestens 21, noch bevorzugter mindestens 23, am bevorzugtesten mindestens 25 und insbesondere mindestens 27; (c) Typ M12 mindestens 26 beträgt; bevorzugt mindestens 28, bevorzugter mindestens 30, noch bevorzugter mindestens 32, am bevorzugtesten mindestens 34 und insbesondere mindestens 36; (d) Typ M16 mindestens 30 beträgt; bevorzugt mindestens 31, bevorzugter mindestens 32, noch bevorzugter mindestens 33, am bevorzugtesten mindestens 34 und insbesondere mindestens 35; (e) Typ M20 mindestens 24 beträgt; bevorzugt mindestens 26, bevorzugter mindestens 28, noch bevorzugter mindestens 30, am bevorzugtesten mindestens 32 und insbesondere mindestens 34; und/oder (f) Typ M24 mindestens 38 beträgt; bevorzugt mindestens 40, bevorzugter mindestens 42, noch bevorzugter mindestens 44, am bevorzugtesten mindestens 46 und insbesondere mindestens 48.
Satz 16: Die Verbundankerpatrone nach einem der vorstehenden Sätze, wobei der Härter (7) eine Partikelgrößenverteilung mit einem D₅₀-Wert von mehr als 300 µm aufweist; bevorzugt mindestens 325 µm, bevorzugter mindestens 350 µm, noch bevorzugter mindestens 375 µm, am bevorzugtesten mindestens 400 µm, und insbesondere mindestens 425 µm, wobei der D₅₀-Wert jeweils durch Siebanalyse als Trockensiebung gemäß DIN 66165 bestimmt wird.
Satz 17: Die Verbundankerpatrone nach Satz 16, wobei der D₅₀-Wert im Bereich von mehr als 300 bis 710 µm liegt; bevorzugt 350 bis 710 µm.
Satz 18: Die Verbundankerpatrone nach Satz 16, wobei der D₅₀-Wert im Bereich von 400±90 µm liegt; bevorzugt 400±80 µm, bevorzugter 400±70 µm, noch bevorzugter 400±60 µm, am bevorzugtesten 400±50 µm, und insbesondere 400±40 µm.
Satz 19: Die Verbundankerpatrone nach Satz 16, wobei der D₅₀-Wert im Bereich von 500±190 µm liegt; bevorzugt 500±175 µm, bevorzugter 500±150 µm, noch bevorzugter 500±125 µm, am bevorzugtesten 500±100 µm, und insbesondere 500±75 µm.
Satz 20: Die Verbundankerpatrone nach Satz 16, wobei der D₅₀-Wert im Bereich von 600±190 µm liegt; bevorzugt 600±175 µm, bevorzugter 600±150 µm, noch bevorzugter 600±125 µm, am bevorzugtesten 600±100 µm, und insbesondere 600±75 µm.
Satz 21: Die Verbundankerpatrone nach einem der vorstehenden Sätze, wobei der Härter (7) eine Partikelgrößenverteilung mit einem D₉₀-Wert von mehr als 50 µm aufweist; bevorzugt mindestens 75 µm, bevorzugter mindestens 100 µm, noch bevorzugter mindestens 125 µm, am bevorzugtesten mindestens 150 µm, und insbesondere mindestens 175 µm, wobei der D₉₀-Wert jeweils durch Siebanalyse als Trockensiebung gemäß DIN 66165 bestimmt wird.
Satz 22: Die Verbundankerpatrone nach einem der vorstehenden Sätze, wobei das Reaktivharz (6) bei 23°C flüssig ist.
Satz 23: Die Verbundankerpatrone nach einem der vorstehenden Sätze, wobei der Gehalt an Reaktivharz für eine Verbundankerpatrone zur Verankerung eines Verankerungsmittels mit einem Außendurchmesser gemäß DIN 13, T1 vom (a) Typ M8 im Bereich von 1,6 g ±90 Gew.-% liegt; bevorzugt 1,6 g ±70 Gew.-%, bevorzugter 1,6 g ±50 Gew.-%, noch bevorzugter 1,6 g ±30 Gew.-%, am bevorzugtesten 1,6 g ±20 Gew.-%, und insbesondere 1,6 g ±10 Gew.-%; (b) Typ M10 im Bereich von 2,3 g ±90 Gew.-% liegt; bevorzugt 2,3 g ±70 Gew.-%, bevorzugter 2,3 g ±50 Gew.-%, noch bevorzugter 2,3 g ±30 Gew.-%, am bevorzugtesten 2,3 g ±20 Gew.-%, und insbesondere 2,3 g ±10 Gew.-%; (c) Typ M12 im Bereich von 3,6 g ±90 Gew.-% liegt; bevorzugt 3,6 g ±70 Gew.-%, bevorzugter 3,6 g ±50 Gew.-%, noch bevorzugter 3,6 g ±30 Gew.-%, am bevorzugtesten 3,6 g ±20 Gew.-%, und insbesondere 3,6 g ±10 Gew.-%; (d) Typ M16 im Bereich von 6,2 g ±90 Gew.-% liegt; bevorzugt 6,2 g ±70 Gew.-%, bevorzugter 6,2 g ±50 Gew.-%, noch bevorzugter 6,2 g ±30 Gew.-%, am bevorzugtesten 6,2 g ±20 Gew.-%, und insbesondere 6,2 g ±10 Gew.-%; (e) Typ M20 im Bereich von 10,7 g ±90 Gew.-% liegt; bevorzugt 10,7 g ±70 Gew.-%, bevorzugter 10,7 g ±50 Gew.-%, noch bevorzugter 10,7 g ±30 Gew.-%, am bevorzugtesten 10,7 g ±20 Gew.-%, und insbesondere 10,7 g ±10 Gew.-%; und/oder (f) Typ M24 im Bereich von 24,3 g ±90 Gew.-% liegt; bevorzugt 24,3 g ±70 Gew.-%, bevorzugter 24,3 g ±50 Gew.-%, noch bevorzugter 24,3 g ±30 Gew.-%, am bevorzugtesten 24,3 g ±20 Gew.-%, und insbesondere 24,3 g ±10 Gew.-%.
Satz 24: Die Verbundankerpatrone nach einem der vorstehenden Sätze, wobei die ethylenisch ungesättigten Gruppen des Reaktivharzes (6) Acrylat- und/oder Methacrylat-Gruppen umfassen oder im Wesentlichen daraus bestehen.
Satz 25: Die Verbundankerpatrone nach einem der vorstehenden Sätze, wobei das Reaktivharz (6) eine oder mehrere Komponenten mit zwei (Meth)acryl-Gruppen umfasst.
Satz 26: Die Verbundankerpatrone nach Satz 25, wobei der eine oder die mehreren Komponenten mit zwei (Meth)acryl-Gruppen bevorzugt im Gemisch mit einer oder mehreren Komponenten mit einer einzelnen (Meth)acryl-Gruppe vorliegen.
Satz 27: Die Verbundankerpatrone nach Satz 25 oder 26, wobei der eine oder die mehreren Komponenten mit zwei (Meth)acryl-Gruppen bevorzugt im Gemisch mit einer oder mehreren Komponenten mit drei (Meth)acryl-Gruppen vorliegen.
Satz 28: Die Verbundankerpatrone nach einem der vorstehenden Sätze, wobei das Reaktivharz (6) ethoxyliertes Bisphenol-A-Dimethacrylat enthält.
Satz 29: Die Verbundankerpatrone nach Satz 28, wobei der Gehalt des ethoxylierten Bisphenol-A-Dimethacrylats mindestens 10 Gew.-% beträgt; bevorzugt mindestens 15 Gew.-%, bevorzugter mindestens 20 Gew.-%, noch bevorzugter mindestens 25 Gew.-%, am bevorzugtesten mindestens 30 Gew.-%, und insbesondere mindestens 35 Gew.-%, jeweils bezogen auf das Gesamtgewicht des Reaktivharzes.
Satz 30: Die Verbundankerpatrone nach Satz 28 oder 29, wobei der Gehalt des ethoxylierten Bisphenol-A-Dimethacrylats höchstens 80 Gew.-% beträgt; bevorzugt höchstens 75 Gew.-%, bevorzugter höchstens 70 Gew.-%, noch bevorzugter höchstens 65 Gew.-%, am bevorzugtesten höchstens 60 Gew.-%, und insbesondere höchstens 55 Gew.-%, jeweils bezogen auf das Gesamtgewicht des Reaktivharzes.
Satz 31: Die Verbundankerpatrone nach einem der vorstehenden Sätze, wobei das Reaktivharz (6) 1,6-Hexandioldimethacrylat enthält.
Satz 32: Die Verbundankerpatrone nach Satz 31, wobei der Gehalt des 1,6-Hexandioldimethacrylatsmindestens 7,5 Gew.-% beträgt; bevorzugt mindestens 10 Gew.-%, bevorzugter mindestens 12,5 Gew.-%, noch bevorzugter mindestens 15 Gew.-%, am bevorzugtesten mindestens 17,5 Gew.-%, und insbesondere mindestens 20 Gew.-%, jeweils bezogen auf das Gesamtgewicht des Reaktivharzes.
Satz 33: Die Verbundankerpatrone nach Satz 31 oder 32, wobei der Gehalt des 1,6-Hexandioldimethacrylats höchstens 37,5 Gew.-% beträgt; bevorzugt höchstens 35 Gew.-%, bevorzugter höchstens 32,5 Gew.-%, noch bevorzugter höchstens 30 Gew.-%, am bevorzugtesten höchstens 27,5 Gew.-%, und insbesondere höchstens 25 Gew.-%, jeweils bezogen auf das Gesamtgewicht des Reaktivharzes.
Satz 34: Die Verbundankerpatrone nach einem der vorstehenden Sätze, wobei das Reaktivharz (6) Hydroxypropylmethacrylat enthält.
Satz 35: Die Verbundankerpatrone nach Satz 34, wobei der Gehalt des Hydroxypropylmethacrylats mindestens 5,0 Gew.-% beträgt; bevorzugt mindestens 7,5 Gew.-%, bevorzugter mindestens 10 Gew.-%, noch bevorzugter mindestens 12,5 Gew.-%, am bevorzugtesten mindestens 15 Gew.-%, und insbesondere mindestens 17,5 Gew.-%, jeweils bezogen auf das Gesamtgewicht des Reaktivharzes.
Satz 36: Die Verbundankerpatrone nach Satz 34 oder 35, wobei der Gehalt des Hydroxypropylmethacrylats höchstens 32,5 Gew.-% beträgt; bevorzugt höchstens 30 Gew.-%, bevorzugter höchstens 27,5 Gew.-%, noch bevorzugter höchstens 25 Gew.-%, am bevorzugtesten höchstens 22,5 Gew.-%, und insbesondere höchstens 20 Gew.-%, jeweils bezogen auf das Gesamtgewicht des Reaktivharzes.
Satz 37: Die Verbundankerpatrone nach einem der vorstehenden Sätze, wobei das Reaktivharz (6) Trimethylolpropantrimethacrylat enthält.
Satz 38: Die Verbundankerpatrone nach Satz 37, wobei der Gehalt des Trimethylolpropantrimethacrylats mindestens 1,5 Gew.-% beträgt; bevorzugt mindestens 3,0 Gew.-%, bevorzugter mindestens 4,5 Gew.-%, noch bevorzugter mindestens 6,0 Gew.-%, am bevorzugtesten mindestens 7,5 Gew.-%, und insbesondere mindestens 9,0 Gew.-%, jeweils bezogen auf das Gesamtgewicht des Reaktivharzes. Satz 39: Die Verbundankerpatrone nach Satz 37 oder 38, wobei der Gehalt des Trimethylolpropantrimethacrylats höchstens 22,5 Gew.-% beträgt; bevorzugt höchstens 20 Gew.-%, bevorzugter höchstens 17,5 Gew.-%, noch bevorzugter höchstens 15 Gew.-%, am bevorzugtesten höchstens 12,5 Gew.-%, und insbesondere höchstens 10 Gew.-%, jeweils bezogen auf das Gesamtgewicht des Reaktivharzes.
Satz 40: Die Verbundankerpatrone nach einem der vorstehenden Sätze, wobei das Reaktivharz (6) ein reaktionsfähiges Silan enthält; bevorzugt Methacryloxypropyltrimethoxysilan.
Satz 41: Die Verbundankerpatrone nach Satz 40, wobei der Gehalt des reaktionsfähigen Silans, bevorzugt Methacryloxypropyltrimethoxysilans, im Bereich von 20±15 Gew.-% liegt; bevorzugt 20±12,5 Gew.-%, bevorzugter 20±10 Gew.-%, noch bevorzugter 20±7,5 Gew.-%, am bevorzugtesten 20±5,0 Gew.-%, und insbesondere 20±2,5 Gew.-%, jeweils bezogen auf das Gesamtgewicht des Reaktivharzes.
Satz 42: Die Verbundankerpatrone nach einem der vorstehenden Sätze, wobei der erste Innenraum (3) neben dem Reaktivharz (6) sowie dem ggf. vorhandenen zweiten Behälter (4) einen partikulären Füllstoff enthält.
Satz 43: Die Verbundankerpatrone nach einem der vorstehenden Sätze, wobei der erste Innenraum (3) eine Länge **L₁** und der zweite Innenraum (5) eine Länge **L₂** aufweist, wobei **L₁** > **L₂**.
Satz 44: Die Verbundankerpatrone nach einem der vorstehenden Sätze, wobei der erste Innenraum (3) eine Länge **L₁** und der zweite Innenraum (5) eine Länge **L₂** aufweist, wobei **L₂** ≥ 0,72·**L₁**; bevorzugt **L₂** ≥ 0,74·**L₁**, bevorzugter **L₂** ≥ 0,76·**L₁**, noch bevorzugter **L₂** ≥ 0,78·**L₁**, am bevorzugtesten **L₂** ≥ 0,80·**L₁**, und insbesondere bevorzugt **L₂** ≥ 0,82·**L₁**.
Satz 45: Die Verbundankerpatrone nach Satz 43 oder 44, wobei **L₂** ≤ 0,95·**L₁**, bevorzugt **L₂** ≤ 0,90·**L₁**.
Satz 46: Die Verbundankerpatrone nach einem der vorstehenden Sätze, wobei der erste Innenraum (3) eine Länge **L₁** aufweist und wobei in einer vertikalen Anordnung des ersten Behälters (2) der erste Innenraum (3) mit dem Reaktivharz (6) und dem ggf. vorhandenen partikulären Füllstoff bis zu einer Füllhöhe **F₁** befüllt ist, wobei **F₁** ≥ 0,64·**L₁**; bevorzugt **F₁** ≥ 0,66·**L₁**, bevorzugter **F₁** ≥ 0,68·**L₁**, noch bevorzugter **F₁** ≥ 0,70**·L₁**, am bevorzugtesten **F₁** ≥ 0,72·**L₁**, und insbesondere bevorzugt **F₁** ≥ 0,74·**L₁**.
Satz 47: Die Verbundankerpatrone nach Satz 45, wobei **F₁** ≤ 0,95·**L₁**, bevorzugt **F₁** ≤ 0,90·**L₁**, bevorzugter **F₁** ≤ 0,85·**L₁.**
Satz 48: Die Verbundankerpatrone nach einem der vorstehenden Sätze, wobei der zweite Innenraum (5) eine Länge **L₂** aufweist und wobei in einer vertikalen Anordnung des zweiten Behälters (4) der zweite Innenraum (5) mit dem Härter (7) bis zu einer Füllhöhe **F₂** befüllt ist, wobei **F₂** ≥ 0,72·**L₂**; bevorzugt **F₂** ≥ 0,74·**L₂**, bevorzugter **F₂** ≥ 0,76-L₂, noch bevorzugter **F₂** ≥ 0,78·**L₂**, am bevorzugtesten **F₂** ≥ 0,80·**L₂**, und insbesondere bevorzugt **F₂** ≥ 0,82·**L₂**.
Satz 49: Die Verbundankerpatrone nach Satz 48, wobei **F₂** ≤ 0,95·**L₂**, bevorzugt **F₂** ≤ 0,90·**L₂**.
Satz 50: Die Verbundankerpatrone nach einem der vorstehenden Sätze, wobei in einer vertikalen Anordnung des ersten Behälters (2) der erste Innenraum (3) mit dem Reaktivharz (6) und dem ggf. vorhandenen partikulären Füllstoff bis zu einer Füllhöhe **F₁** befüllt ist; und wobei in einer vertikalen Anordnung des zweiten Behälters (4) der zweite Innenraum (5) mit dem Härter (7) bis zu einer Füllhöhe **F₂** befüllt ist, wobei **F₁** ≥ **F₂**.

Die nachfolgenden Beispiele dienen der Erläuterung der Erfindung, sind jedoch nicht einschränkend auszulegen:
Es wurden Verbundankerpatronen der Typen M8, M10, M12, M16, M20 und M24 mit jeweils einem äußeren Glasbehälter und einem inneren Glasbehälter hergestellt. Die Glaspatronen unterschieden sich jeweils voneinander in der Größe der inneren und äußeren Glasbehälter.

Die inneren Glasbehälter wurden jeweils mit einem Pulver aus Dibenzoylperoxid (DBP) als Radikalstarter und Ethylenglykoldibenzoat (EGDB) als Phlegmatisierungsmittel befüllt. Die äußeren Glasbehälter wurden jeweils mit einem inneren Glasbehälter, Quarz als Füllstoff und einem flüssigen Reaktivharz befüllt.

Das flüssige Reaktivharz war jeweils identisch und enthielt gemäß Spezifikation
35-55 Gew.-% ethoxyliertes Bisphenol-A-Dimethacrylat (CAS 41637-38-1);
< 25 Gew.-% 1,6-Hexandiylbismethacrylat (CAS 6606-59-3);
< 20 Gew.-% Methacrylsäure Monoester mit Propan-1,2-diol (CAS 27813-02-1);
< 10 Gew.-% Propylidintrimethyltrimethacrylat (CAS 3290-92-4);
< 2,5 Gew.-% eines Reaktionsprodukts aus 2,2'-[(4-Methylphenyl)imino]bisethanol und 2-[[2-(2-Hydroxyethoxy)-ethyl]-(4-methylphenyl)amino]ethanol; und
< 0,25 Gew.% 4-tert-Butylbrenzcatechin (CAS 98-29-3).

Die erfindungsgemäßen Beispiele unterschieden sich von den Vergleichsbeispielen lediglich im phlegmatisierten Härter: Bei den erfindungsgemäßen Beispielen betrug der Gewichtsanteil von Dibenzoylperoxid (DBP) und Ethylenglykoldibenzoat (EGDB) 45:55 (w/w), bei den Vergleichsbeispielen hingegen 50:50 (w/w).

Für den Vergleich der beiden phlegmatisierten Härter miteinander wurden für jeden Typ Glaspatrone bis auf den unterschiedlichen Härter jeweils alle übrigen Parameter und Bedingungen konstant gehalten, insbesondere Größe und Art der inneren Glasbehälter, Füllhöhe der inneren Glasbehälter mit phlegmatisiertem Härter, Größe und Art der äußeren Glasbehälter, Menge an Quarz, sowie Füllhöhe der äußeren Glasbehälter jeweils mit innerem Glasbehälter, mit Quarz und mit Reaktivharz.

Es wurden die Verbundspannungen in Beton der Festigkeitsklasse C20/25 gemessen. Die gemessenen Mittelwerte (n ≥ 5) der Verbundspannungen sind in nachfolgender Tabelle aufgeführt; die relative prozentuale Verbesserung Δ ist ebenfalls angegeben:

| [N/mm²] | | erfindungsgemäß 45:55 | Vergleich 50:50 | Δ |
|---|---|---|---|---|
| M8 | R3 | 15,3 | 12,6 | + 21,4% |
| M10 | | 17,7 | 16,2 | + 9,3% |
| M10 | R1 | 25,6 | 23,3 | + 9,9% |
| M12 | | 31,9 | 28,0 | + 13,9% |
| M16 | | 32,0 | 31,2 | +2,6% |
| M20 | | 29,1 | 28,6 | + 1,7% |
| M24 | | 27,2 | 26,3 | + 3,4% |

| | | | | |
|---|---|---|---|---|
| R1: ungerissener Beton R3: gerissener Beton (Rissbreite 0,3 mm) | | | | |

Wie die experimentellen Daten belegen, zeigen die erfindungsgemäßen Verbundankerpatronen infolge des veränderten phlegmatisierten Härters durchweg signifikant verbesserte Verbundspannungen.

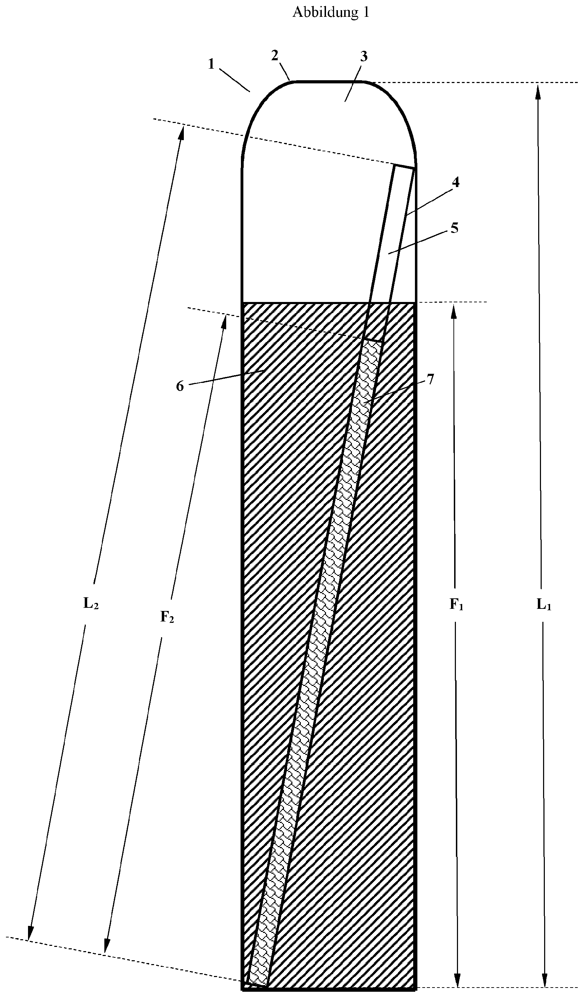

Abbildung 1 illustriert eine bevorzugte Ausführungsform einer erfindungsgemäßen Verbundankerpatrone (1). Ein erster Behälter (2) weist einen ersten Innenraum (3) auf, welcher Reaktivharz (6) enthält und ggf. zusätzlich einen Füllstoff (Quarz, Korund, etc.). Ein zweiter Behälter (4) weist einen zweiten Innenraum (5) auf, welcher partikulären Härter (7) enthält.

Der zweite Behälter (4) ist zusammen mit dem Reaktivharz und ggf. dem Füllstoff im ersten Innenraum (3) des ersten Behälters (2) angeordnet, wobei Reaktivharz (6) und partikulärer Härter (7) durch die Wand des zweiten Behälters (4) voneinander getrennt sind. Erst wenn der zweite Behälter (4) aufgebrochen wird, kann es zur Vermischung von Reaktivharz (6) und Härter (7) kommen.

Der erste Innenraum (3) weist eine Länge **L₁** auf. In einer vertikalen Anordnung des ersten Behälters (2) ist der erste Innenraum (3) mit dem Reaktivharz (6) und dem ggf. vorhandenen partikulären Füllstoff sowie dem zweiten Behälter (4) bis zu einer Füllhöhe **F₁** befüllt. Der zweite Innenraum (5) weist eine Länge **L₂** auf. In einer vertikalen Anordnung des zweiten Behälters (4) ist der zweite Innenraum (5) mit dem Härter (7) bis zu einer Füllhöhe **F₂** befüllt.

Sofern der erste Behälter (2) aus einem sprödbrüchigen Material, insbesondere aus Glas gefertigt ist, werden erster Behälter (2) und zweiter Behälter (4) bevorzugt beide aufgebrochen.

### Bezugszeichenliste:

| | | | |
|---|---|---|---|
| 1 | - Verbundankerpatrone | 5 | - zweiter Innenraum |
| 2 | - erster Behälter | 6 | - Reaktivharz |
| 3 | - erster Innenraum | 7 | - partikulärer Härter |
| 4 | - zweiter Behälter | | |

## Patentansprüche

1. Eine Verbundankerpatrone (1) umfassend
einen ersten Behälter (2) mit einem ersten Innenraum (3), welcher ein Reaktivharz (6) mit ethylenisch ungesättigten Gruppen enthält; und
einen zweiten Behälter (4) mit einem zweiten Innenraum (5), welcher einen partikulären Härter (7) enthält; wobei der Härter (7) Dibenzoylperoxid umfasst, das mit Ethylenglykoldibenzoat phlegmatisiert ist, und wobei der Gehalt an Dibenzoylperoxid weniger als 50,0 Gew.-% beträgt, bezogen auf das Gesamtgewicht des Härters (7).

2. Die Verbundankerpatrone nach Anspruch 1, wobei der Gehalt an Dibenzoylperoxid höchstens 49,4 Gew.-% beträgt, bezogen auf das Gesamtgewicht des Härters (7).

3. Die Verbundankerpatrone nach Anspruch 1 oder 2, wobei der Gehalt an Dibenzoylperoxid im Bereich von 45,0±5,0 Gew.-% liegt; bevorzugt 45,0±4,5 Gew.-%, bevorzugter 45,0±4,0 Gew.-%, noch bevorzugter 45,0±3,5 Gew.-%, am bevorzugtesten 45,0±3,0 Gew.-%, und insbesondere 45,0±2,5 Gew.-%, jeweils bezogen auf das Gesamtgewicht des Härters

4. Die Verbundankerpatrone nach einem der vorstehenden Ansprüche, wobei der Gehalt an Ethylenglykoldibenzoat mehr als 50,0 Gew.-% beträgt; bevorzugt 50,1 bis 60,0 Gew.-%, bevorzugter 50,6 bis 60,0 Gew.-%, noch bevorzugter 51,0 bis 60,0 Gew.-%, noch bevorzugter 52,0 bis 60,0 Gew.-%, noch bevorzugter 53,0 bis 60,0 Gew.-%, am bevorzugtesten 54,0 bis 60,0 Gew.-%, und insbesondere 55,0 bis 60,0 Gew.-%, jeweils bezogen auf das Gesamtgewicht des Härters (7).

5. Die Verbundankerpatrone nach einem der vorstehenden Ansprüche, wobei der Gehalt an Ethylenglykoldibenzoat im Bereich von 55,0±5,0 Gew.-% liegt; bevorzugt 55,0±4,5 Gew.-%, bevorzugter 55,0±4,0 Gew.-%, noch bevorzugter 55,0±3,5 Gew.-%, am bevorzugtesten 55,0±3,0 Gew.-%, und insbesondere 55,0±2,5 Gew.-%, jeweils bezogen auf das Gesamtgewicht des Härters

6. Die Verbundankerpatrone nach einem der vorstehenden Ansprüche, wobei der Härter (7) im Wesentlichen aus Dibenzoylperoxid und Ethylenglykoldibenzoat besteht.

7. Die Verbundankerpatrone nach einem der vorstehenden Ansprüche, wobei der zweite Behälter (4) in dem ersten Innenraum (3) angeordnet ist und wobei der erste Innenraum (3) das Reaktivharz (6) außerhalb des zweiten Behälters (4) enthält.

8. Die Verbundankerpatrone nach einem der vorstehenden Ansprüche, wobei der erste Behälter (2) aus Glas oder aus einer Folie ist, bevorzugt aus Glas.

9. Die Verbundankerpatrone nach einem der vorstehenden Ansprüche, wobei der zweite Behälter (4) aus Glas oder aus einer Folie ist, bevorzugt aus Glas.

10. Die Verbundankerpatrone nach einem der vorstehenden Ansprüche, wobei der Härter (7) eine Partikelgrößenverteilung mit einem D₅₀-Wert von mehr als 300 µm aufweist; bevorzugt mindestens 325 µm, bevorzugter mindestens 350 µm, noch bevorzugter mindestens 375 µm, am bevorzugtesten mindestens 400 µm, und insbesondere mindestens 425 µm, wobei der D₅₀-Wert jeweils durch Siebanalyse als Trockensiebung gemäß DIN 66165 bestimmt wird.

11. Die Verbundankerpatrone nach einem der vorstehenden Ansprüche, wobei die ethylenisch ungesättigten Gruppen des Reaktivharzes (6) Acrylat- und/oder Methacrylat-Gruppen umfassen oder im Wesentlichen daraus bestehen.

12. Die Verbundankerpatrone nach einem der vorstehenden Ansprüche, wobei das Reaktivharz (6) ethoxyliertes Bisphenol-A-Dimethacrylat enthält.

13. Die Verbundankerpatrone nach einem der vorstehenden Ansprüche, wobei der erste Innenraum (3) eine Länge **L₁** aufweist und wobei in einer vertikalen Anordnung des ersten Behälters (2) der erste Innenraum (3) mit dem Reaktivharz (6) und dem ggf. vorhandenen partikulären Füllstoff bis zu einer Füllhöhe **F₁** befüllt ist, wobei **F₁** ≥ 0,64·**L₁**; bevorzugt **F₁** ≥ 0,66·**L₁**, bevorzugter **F₁** ≥ 0,68·**L₁**, noch bevorzugter **F₁** ≥ 0,70·L₁, am bevorzugtesten **F₁** ≥ 0,72·L₁, und insbesondere bevorzugt **F₁** ≥ 0,74·**L₁**.

14. Die Verbundankerpatrone nach einem der vorstehenden Ansprüche, wobei der zweite Innenraum (5) eine Länge **L₂** aufweist und wobei in einer vertikalen Anordnung des zweiten Behälters (4) der zweite Innenraum (5) mit dem Härter (7) bis zu einer Füllhöhe **F₂** befüllt ist, wobei **F₂** ≥ 0,72·**L₂**; bevorzugt **F₂** ≥ 0,74·**L₂**, bevorzugter **F₂** ≥ 0,76·L₂, noch bevorzugter **F₂** ≥ 0,78·**L₂**, am bevorzugtesten **F₂** ≥ 0,80·L₂, und insbesondere bevorzugt **F₂** ≥ 0,82·**L₂**.

15. Die Verbundankerpatrone nach einem der vorstehenden Ansprüche, wobei in einer vertikalen Anordnung des ersten Behälters (2) der erste Innenraum (3) mit dem Reaktivharz (6) und dem ggf. vorhandenen partikulären Füllstoff bis zu einer Füllhöhe **F₁** befüllt ist; und wobei in einer vertikalen Anordnung des zweiten Behälters (4) der zweite Innenraum (5) mit dem Härter (7) bis zu einer Füllhöhe **F₂** befüllt ist, wobei **F₁** ≥ **F₂**.

## Claims

1. A composite anchor cartridge (1) comprising
a first container (2) with a first interior space (3) containing a reactive resin (6) with ethylenically unsaturated groups; and
a second container (4) with a second interior space (5) containing a particulate hardener (7); wherein the hardener (7) comprises dibenzoyl peroxide phlegmatized with ethylene glycol dibenzoate, and wherein the content of dibenzoyl peroxide is less than 50.0 wt.% based on the total weight of the hardener (7).

2. The composite anchor cartridge according to claim 1, wherein the content of dibenzoyl peroxide is at most 49.4 wt.%, based on the total weight of the hardener (7).

3. The composite anchor cartridge according to claim 1 or 2, wherein the content of dibenzoyl peroxide is in the range of 45.0±5.0 wt.%; preferably 45.0±4.5 wt.%, more preferably 45.0±4.0 wt.%, even more preferably 45.0±3.5 wt.%, most preferably 45.0±3.0 wt.%, and in particular 45.0±2.5 wt.%, in each case based on the total weight of the hardener.

4. The composite anchor cartridge according to any of the preceding claims, wherein the content of ethylene glycol dibenzoate is more than 50.0 wt.%; preferably 50.1 to 60.0 wt.%, more preferably 50.6 to 60.0 wt.%, still more preferably 51.0 to 60.0 wt.%, yet more preferably 52.0 to 60.0 wt.%, even more preferably 53.0 to 60.0 wt.%, most preferably 54.0 to 60.0 wt.%, and in particular 55.0 to 60.0 wt.%, in each case based on the total weight of the hardener (7).

5. The composite anchor cartridge according to any of the preceding claims, wherein the content of ethylene glycol dibenzoate is in the range of 55.0±5.0 wt.%; preferably 55.0±4.5 wt.%, more preferably 55.0±4.0 wt.%, even more preferably 55.0±3.5 wt.%, most preferably 55.0±3.0 wt.%, and in particular 55.0±2.5 wt.%, in each case based on the total weight of the hardener.

6. The composite anchor cartridge according to any of the preceding claims, wherein the hardener (7) essentially consists of dibenzoyl peroxide and ethylene glycol dibenzoate.

7. The composite anchor cartridge according to any of the preceding claims, wherein the second container (4) is arranged in the first interior space (3) and wherein the first interior space (3) contains the reactive resin (6) outside the second container (4).

8. The composite anchor cartridge according to any of the preceding claims, wherein the first container (2) is made of glass or foil, preferably glass.

9. The composite anchor cartridge according to any of the preceding claims, wherein the second container (4) is made of glass or foil, preferably glass.

10. The composite anchor cartridge according to any of the preceding claims, wherein the hardener (7) has a particle size distribution with a D₅₀ value of more than 300 µm; preferably at least 325 µm, more preferably at least 350 µm, even more preferably at least 375 µm, most preferably at least 400 µm, and in particular at least 425 µm, wherein the D₅₀ value is determined in each case by sieve analysis as dry sieving according to DIN 66165.

11. The composite anchor cartridge according to any of the preceding claims, wherein the ethylenically unsaturated groups of the reactive resin (6) comprise or essentially consist of acrylate and/or methacrylate groups .

12. The composite anchor cartridge according to any of the preceding claims, wherein the reactive resin (6) contains ethoxylated bisphenol A dimethacrylate.

13. The composite anchor cartridge according to any of the preceding claims, wherein the first interior space (3) has a length **L₁** and wherein, in a vertical arrangement of the first container (2), the first interior space (3) is filled with the reactive resin (6) and the optionally present particulate filler up to a filling height **F₁,** wherein **F₁** ≥ 0.64·**L₁;** preferably **F₁** ≥ 0.66·**L₁**, more preferably **F₁** ≥ 0.68·**L₁**, even more preferably **F₁** ≥ 0.70·**L₁**, most preferably **F₁** ≥ 0.72·**L₁**, and particularly preferably **F₁** ≥ 0.74**·L₁.**

14. The composite anchor cartridge according to any of the preceding claims, wherein the second interior space (5) has a length **L₂** and wherein, in a vertical arrangement of the second container (4), the second interior space (5) is filled with the hardener (7) up to a filling height **F₂,** wherein **F₂** ≥ 0.72·**L₂**; preferably **F₂** ≥ 0.74·**L₂**, more preferably **F₂** ≥ 0.76·**L₂**, even more preferably **F₂** ≥ 0.78·**L₂**, most preferably **F₂** ≥ 0.80·**L₂**, and particularly preferably **F₂** ≥ 0.82·**L₂**.

15. The composite anchor cartridge according to any of the preceding claims, wherein, in a vertical arrangement of the first container (2), the first interior space (3) is filled with the reactive resin (6) and the optionally present particulate filler up to a filling height **F₁;** and wherein, in a vertical arrangement of the second container (4), the second interior space (5) is filled with the hardener (7) up to a filling height **F₂,** wherein **F₁** ≥ **F₂**.

## Revendications

1. Cartouche d'ancrage composite (1) comprenant un premier récipient (2) avec un premier espace intérieur (3) qui contient une résine réactive (6) avec des groupes éthyléni-quement insaturés ; et
un second récipient (4) avec un second espace intérieur (5) contenant un durcisseur (7) particulaire ; dans laquelle le durcisseur (7) comprend du peroxyde de dibenzoyle flegmatisé avec du dibenzoate d'éthylène glycol, et dans laquelle la teneur en peroxyde de dibenzoyle est inférieure à 50,0 % en poids par rapport au poids total du durcisseur (7).

2. Cartouche d'ancrage composite selon la revendication 1, dans laquelle la teneur en peroxyde de dibenzoyle est d'au plus 49,4 % en poids par rapport au poids total du durcisseur (7).

3. Cartouche d'ancrage composite selon la revendication 1 ou 2, dans laquelle la teneur en peroxyde de dibenzoyle est dans la plage de 45,0±5,0 % en poids ; de préférence de 45,014,5 % en poids, de manière davantage préférée de 45,0±4,0 % en poids, de manière encore davantage préférée de 45,0±3,5 % en poids, de manière préférée entre toutes de 45,013,0 % en poids, et en particulier de 45,012,5 % en poids, respectivement par rapport au poids total du durcisseur.

4. Cartouche d'ancrage composite selon l'une quelconque des revendications précédentes, dans laquelle la teneur en dibenzoate d'éthylène glycol est supérieure à 50,0 % en poids ; de préférence de 50,1 à 60,0 % en poids, de manière davantage préférée de 50,6 à 60,0 % en poids, de manière encore davantage préférée de 51,0 à 60,0 % en poids, de manière encore davantage préférée de 52,0 à 60,0 % en poids, de manière encore davantage préférée de 53,0 à 60,0 % en poids, de manière préférée entre toutes de 54,0 à 60,0 % en poids, et en particulier de 55,0 à 60,0 % en poids, respectivement par rapport au poids total du durcisseur (7).

5. Cartouche d'ancrage composite selon l'une quelconque des revendications précédentes, dans laquelle la teneur en dibenzoate d'éthylènglycol est dans la plage de 55,015,0 % en poids ; de préférence de 55,0±4,5 % en poids, de manière davantage préférée de 55,014,0 % en poids, de manière encore davantage préférée de 55,013,5 % en poids, de manière préférée entre toutes de 55,0±3,0 % en poids, et en particulier de 55,012,5 % en poids, respectivement par rapport au poids total du durcisseur.

6. Cartouche d'ancrage composite selon l'une quelconque des revendications précédentes, dans laquelle le durcisseur (7) est constitué sensiblement de peroxyde de dibenzoyle et de dibenzoate d'éthylène glycol.

7. Cartouche d'ancrage composite selon l'une quelconque des revendications précédentes, dans laquelle le second récipient (4) est disposé dans le premier espace intérieur (3) et dans laquelle le premier espace intérieur (3) contient la résine réactive (6) à l'extérieur du second récipient (4).

8. Cartouche d'ancrage composite selon l'une quelconque des revendications précédentes, dans laquelle le premier récipient (2) est en verre ou en feuille, de préférence en verre.

9. Cartouche d'ancrage composite selon l'une quelconque des revendications précédentes, dans laquelle le second récipient (4) est en verre ou en feuille, de préférence en verre.

10. Cartouche d'ancrage composite selon l'une quelconque des revendications précédentes, dans laquelle le durcisseur (7) présente une distribution granulométrique ayant une valeur D₅₀ supérieure à 300 µm ; de préférence d'au moins 325 µm, de manière davantage préférée d'au moins 350 µm, de manière encore davantage préférée d'au moins 375 µm, de manière préférée entre toutes d'au moins 400 µm, et en particulier d'au moins 425 µm, dans lequel la valeur D₅₀ est déterminée par analyse au tamis comme tamisage à sec selon la norme DIN 66165.

11. Cartouche d'ancrage composite selon l'une quelconque des revendications précédentes, dans laquelle les groupes éthyléni-quement insaturés de la résine réactive (6) comprennent des groupes acrylate et/ou méthacrylate ou sont sensiblement constitués de ceux-ci.

12. Cartouche d'ancrage composite selon l'une quelconque des revendications précédentes, dans laquelle la résine réactive (6) contient du diméthacrylate de bisphénol A éthoxylé.

13. Cartouche d'ancrage composite selon l'une quelconque des revendications précédentes, dans laquelle le premier espace intérieur (3) présente une longueur **L₁** et dans laquelle, dans un agencement vertical du premier récipient (2), le premier espace intérieur (3) est rempli de la résine réactive (6) et de la charge particulaire éventuellement présente jusqu'à une hauteur de remplissage **F₁,** dans laquelle **F₁** ≥ 0,64 **·L₁** ; de préférence **F₁** ≥ 0,66 **·L₁,** de manière davantage préférée **F₁** ≥ 0,68 **·L₁,** de manière encore davantage préférée **F₁** ≥ 0,70 **-L₁,** de manière préférée entre toutes **F₁** ≥ 0,72 **-L₁,** et de manière particulièrement préférée **F₁** ≥ 0,74 **·L₁.**

14. Cartouche d'ancrage composite selon l'une quelconque des revendications précédentes, dans laquelle le second espace intérieur (5) présente une longueur **L₂** et dans laquelle, dans un agencement vertical du second récipient (4), le second espace intérieur (5) est rempli du durcisseur (7) jusqu'à une hauteur de remplissage **F₂,** dans laquelle **F₂** ≥ 0,72 **·L₂** ; de préférence **F₂** ≥ 0,74 **·L₂,** de manière davantage préférée **F₂** ≥ 0,76 **·L₂,** de manière encore davantage préférée **F₂** ≥ 0,78 **-L₂,** de manière préférée entre toutes **F₂** ≥ 0,80 **-L₂,** et de manière particulièrement préférée **F₂** ≥ 0,82 **·L₂.**

15. Cartouche d'ancrage composite selon l'une quelconque des revendications précédentes, dans laquelle, dans un agencement vertical du premier récipient (2), le premier espace intérieur (3) est rempli de la résine réactive (6) et de la charge particulaire éventuellement présente jusqu'à une hauteur de remplissage **F₁** ; et dans laquelle, dans un agencement vertical du second récipient (4), le second espace intérieur (5) est rempli du durcisseur (7) jusqu'à une hauteur de remplissage **F₂,** dans laquelle **F₁** ≥ **F₂**.
